# EUROPEAN PATENT SPECIFICATION

(11) **EP 3 788 474 B1**
(45) Date of publication and mention of the grant of the patent: **30.09.2026**
(21) Application number: 18740437.1
(22) Date of filing: 21.06.2018
(51) Int. Cl.: G06F 9/44

(54) **AUTOMATED COMPUTER OPERATING SYSTEM OPTIMIZATION**
AUTOMATISIERTE OPTIMIERUNG EINES COMPUTERBETRIEBSSYSTEMS
OPTIMISATION AUTOMATISÉE DE SYSTÈME D'EXPLOITATION D'ORDINATEUR

(43) Date of publication of application: 10.03.2021
(73) Proprietor: Google LLC, Mountain View, CA 94043 (US)
(72) Inventor: SCHOTT, Mark, Mountain View, CA 94043 (US); SHANKAR, Karthik, Ravi, Mountain View, CA 94043 (US)
(74) Representative: Colonna, Matthew Oliver
(86) International application number: PCT/US2018/038858
(87) International publication number: WO 2019/245571

(56) References cited:
- US-B2- 7 197 577

## Description

### BACKGROUND

Many computing devices, including mobile computing devices, can run application software to perform various functions, such as communication-related functions, data manipulation functions, image generation and/or presentation functions, audio generation and/or presentation function, and other functions. The application software can be downloaded, or communicated to a computing device from a server or other computing device. In some cases, the application software can be downloaded as part of a software package. The software package can include application software and instructions for installing the application software. For example, the software package can be executable to carry out the instructions to install the application software.

System software, such as an operating system kernel, can be used to manage a computing device. The operating system kernel can perform various functions for the mobile computing device, such as scheduling software processes for execution, manage access of input/output (I/O) devices, and allocate memory. A process can be a set of instructions of a software component that is executing (an active process) or could be executed (a waiting process, a sleeping process) on one or more processors of the computing device. The process can include one or more threads of execution, where a thread can execute part or all of the set of instructions of the software component concurrently with other threads of the process. US 7197577 B2 discloses automatic selection of an input/output scheduler in a computing system with a plurality of input/output schedulers.

### SUMMARY

According to the present invention, there is provided a computer-implemented method according to claim 1, a computing device according to claim 13, and a computer program product according to claim 14. In one aspect, a computer-implemented method is provided. A kernel component of an operating system kernel executing on a computing device performs a kernel operation. A machine-learning model executing on the computing device receives operation-related information related to the kernel operation. The machine-learning model determines an inference based on the operation-related information. The inference is provided to the kernel component. The kernel component adjusts performance of the kernel operation based on the inference.

In another aspect, a computing device is provided. The computing device includes one or more processors; and one or more computer-readable media having computer-executable instructions stored thereon that, when executed by the one or more processors, cause the computing device to perform functions. The functions include: performing a kernel operation by a kernel component of an operating system kernel executing on the computing device; receiving, at a machine-learning model executing on the computing device, operation-related information related to the kernel operation; determining, by the machine-learning model, an inference based on the operation-related information; providing the inference to the kernel component; and adjusting performance of the kernel operation by the kernel component based on the inference.

In another aspect, an article of manufacture is provided. The article of manufacture includes one or more computer-readable media having computer-executable instructions stored thereon, that when executed by one or more processors of a computing device, cause the computing device to perform functions. The functions include: performing a kernel operation by a kernel component of an operating system kernel executing on the computing device; receiving, at a machine-learning model executing on the computing device, operation-related information related to the kernel operation; determining, by the machine-learning model, an inference based on the operation-related information; providing the inference to the kernel component; and adjusting performance of the kernel operation by the kernel component based on the inference.

In another aspect, a computing device is provided. The computing device includes: means for performing a kernel operation of an operating system kernel; means for receiving operation-related information related to the kernel operation; means for determining an inference based on the operation-related information; means for providing the inference; and means for adjusting performance of the kernel operation based on the inference.

The foregoing summary is illustrative only and is not intended to be in any way limiting. In addition to the illustrative aspects, embodiments, and features described above, further aspects, embodiments, and features will become apparent by reference to the figures and the following detailed description and the accompanying drawings.

### BRIEF DESCRIPTION OF THE FIGURES

FIG. 1 is a diagram illustrating a software architecture for a computing device, in accordance with some example embodiments.
FIG. 2 is a diagram illustrating training and inference phases of a machine learning model, in accordance with some example embodiments.
FIG. 3 is a table summarizing input data and related inferences for software components of the software architecture of FIG. 1, in accordance with some example embodiments.
FIGS. 4, 5, 6, 7, 8, 9, 10, 11, 12, 13, 14, and 15 depict communication flows of a scenario where a trained machine learning model provides inferences to software components, in accordance with some example embodiments.
FIG. 16 depicts a distributed computing architecture, in accordance with some example embodiments.
FIG. 17 is a functional block diagram of a computing device, in accordance with some example embodiments.
FIG. 18 is a flowchart of a method, in accordance with some example embodiments.

### DETAILED DESCRIPTION

Some computing devices can use operating systems to manage resources of the computing device. An operating system can have a central part or "kernel" of software that manages key resources of the computing device, including memory and processor time. The kernel can be made up of one or more kernel components which can include, but are not limited to, a process scheduler, a memory manager, an input-output (I/O) scheduler, and a system resource manager.

Operating systems, including kernel components, often use simple, fast-to-compute heuristics to guide and make various decisions in performing operations for managing computing devices. Heuristics also can be used by non-kernel components, such as software applications that are not part of the operating system. These heuristics can make decisions quickly but may not provide optimal solutions as such heuristics can lack a holistic context of a computing device (or an application).

Different techniques than heuristic, such as machine learning techniques, may provide better decisions. One machine learning technique involves training a machine learning algorithm on an input set of training data to recognize patterns in the training data and provide output inferences about the (patterns in the) training data. The resulting trained machine learning algorithm can be termed as a trained machine learning model. Then, the trained machine learning model can receive input data that is similar to the training data as an input and generate corresponding inferences about the input data.

Input data for trained machine learning models can relate to operations of a computing device. The input data and/or the operation-related information can include kernel-related input data, application-specific input data, and/or other input data; e.g., user-provided data. The kernel-related input data provided to the trained machine learning model can include data related to a computing device executing and utilizing the kernel, including data related to one or more kernel components. The application-specific input data provided to the trained machine learning model can include data related to one or more non-kernel components and/or software applications.

In some cases, inferences provided by the trained machine learning model can lead to more accurate solutions of problems than solutions based on a related heuristic of a kernel component or a non-kernel component. As one example, a trained machine learning model may recognize patterns, trends, and/or features in data that occur over longer time periods than considered by a related heuristic, and generate an inference whose result is better than a result of the related heuristic. As another example, a trained machine learning model may recognize patterns, trends, and/or features based on a larger set of input data than considered by a related heuristic, and generate an inference whose result is better than a result of the related heuristic. As yet another example, a trained machine learning model that has either been trained on device-specific data and/or utilizes output inferences as input in a feedback loop may recognize patterns, trends, and/or features that are specific to the device which may not be considered by a related heuristic, and generate an inference whose result is better than a result of the related heuristic. Other examples of patterns or trends that can be recognized by trained machine learning models that may not be recognized by related heuristics are possible as well.

While a trained machine learning model may make better decisions than a related heuristic, the trained machine learning model can be very slow to train and slow to provide inferences. For example, some trained machine learning models take on the order of tens of milliseconds to make an inference, even with specialized hardware. The time taken by trained machine learning models may be too slow in some cases; *e.g.,* a process time slice may be as short as five milliseconds. Thus, the additional time spent by the trained machine learning model may make sole use of trained machine learning models infeasible as a complete replacement for faster heuristics.

Herein are described techniques for combining results of heuristics with inferences generated by trained machine learning models to aid decision making of both kernel components and non-kernel components. The herein-described techniques allow kernel and non-kernel components to make more accurate decisions based on the inferences generated by trained machine learning models while still enjoying the quick response time of heuristics, thereby improving both operating system performance and overall computing device performance.

Execution of the trained machine learning models can involve executing an inference daemon. The inference daemon can provide input and/or output support for one or more trained machine learning models; *e.g.,* read input data, receive inference requests, output inference responses that include inferences. In some examples, the inference daemon can execute the trained machine learning models on a particular computing device and provide inferences for software executing on the particular computing device. In other examples, the inference daemon can execute on a computing device to provide access to inferences generated by the trained machine learning models, where the trained machine learning models can be executing on a different computing device. Also, in some examples, the inference daemon can provide inferences using one trained machine learning model; while in other examples, the inference daemon can provide inferences using a plurality of trained machine learning models; *e.g.,* one trained machine learning model for process scheduling, one trained machine learning model for memory management, one trained machine learning model for database applications, etc.

Kernel and non-kernel software components can be modified to utilize inferences from one or more trained machine learning models while retaining fast response times provided by existing heuristics. As one example, a kernel (or non-kernel) component can receive inferences from the trained machine learning model and combine those inferences with results from its own heuristics to perform one or more kernel-related (or non-kernel-related) operations. This inference and heuristic results can be combined using efficient combination techniques, such as performing a linear or other mathematical combination of inference values provided as inference results with heuristic values provided as heuristic results.

The trained machine learning models can be separated from other software components of a computing device, including kernel components. This separation of the trained machine learning model can involve executing the inference daemon (and therefore the trained machine learning models) in a non-kernel *(e.g.,* user) memory space, enabling use of non-kernel space libraries/frameworks for machine learning. Then, kernel (and non-kernel) components can receive inferences from the trained machine learning models, perhaps upon request, by way of the software daemon. Further, this separation allows for fewer kernel modifications and less kernel software, which reduces related security risks and kernel resource requirements.

In some examples, the trained machine learning models and inference-requesting kernel and non-kernel components can share both input data and/or inferences asynchronously without creating significant additional software interfaces, such as new system calls. Allowing the trained machine learning model to provide inferences asynchronously *(e.g.,* through one or more output files) enables a software component to avoid waiting for inferences provided by the trained machine learning model. As the trained machine learning model is separated from other software components, inferences can be provided to a kernel component (or non-kernel component) in an asynchronous fashion from operations performed by the kernel component (or non-kernel component), allowing the kernel component (or non-kernel component) to perform operations without coordinating those operations with inferences. For example, a process scheduler can continue to schedule processes without having to wait for an inference. Providing inferences asynchronously from kernel component (or non-kernel component) operations reduces or eliminates waiting for inferences and therefore allows for increased system-wide performance. In some cases, a timed interface that delivers inferences at predetermined time intervals and/or within a predetermined amount of time from requesting an inference can be used along with or instead of asynchronous inferences.

The herein-described techniques may help to provide a flexible and efficient approach to making operating system decisions based on the best features of machine learning inferences and heuristics. Combining inference values with heuristic values provides the best features of machine learning inferences and heuristics in terms of latency and quality of predictions. Further, as illustrated herein, the herein-described techniques are generalizable to a number of different software components and related heuristics, including both kernel software components and non-kernel software components of a computing device. The herein-described techniques can enable the use of machine learning to increase the quality of operations performed by kernel and non-kernel software components; e.g., kernel operations can have higher cache hit rates, better CPU scheduling; non-kernel operations can have more reliable database checkpointing, provide better audio/video content presentation, and better optimize hot loops. As such, the herein-described techniques can enable machine learning to enhance the performance of both the kernel and non-kernel software components, thereby enhancing the overall performance of the computing device.

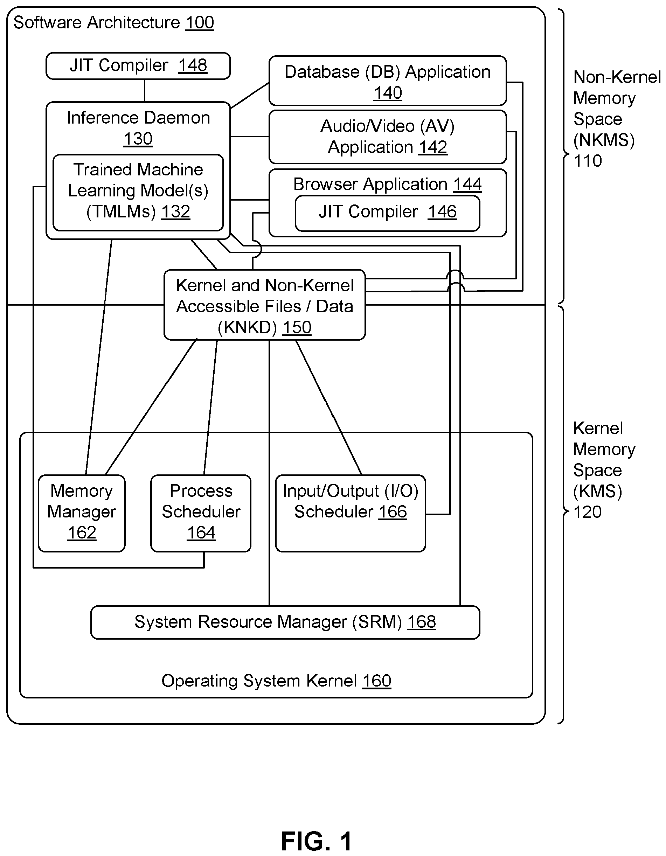

FIG. 1 is a diagram illustrating software architecture 100 for a computing device, in accordance with some example embodiments. Software architecture 100 can reside in a memory or data storage of the computing device, and can be divided into two distinct portions: non-kernel memory space (NKMS) 110 and kernel memory space (KMS) 120.

Non-kernel memory space 110, which can also be termed user memory space, includes memory for non-kernel software executing on the computing device. Part or all of a software executable configured to execute in non-kernel memory space 110 can be termed a non-kernel component. FIG. 1 illustrates non-kernel memory space 110 of software architecture 100 with examples of non-kernel components including inference daemon 130, one or more trained machine learning models (TMLMs) 132, database application 140, audio/video (AV) application 142, browser application 144, and just-in-time (JIT) compilers 146 and 148, where inference daemon 130 includes trained machine learning model(s) 132, and where browser application 144 includes just-in-time (JIT) compiler 146. While executing, a non-kernel component can perform one or more "non-kernel operations" or activities related to carrying out one or more tasks of the non-kernel component. More, fewer, and/or different examples of non-kernel components are possible as well.

Inference daemon 130 and trained machine learning model(s) 132 can generate one or more inferences using the herein-described techniques. In some cases, inference daemon 130 and trained machine learning model(s) 132 can generate the inferences in response to an inference request. In other cases, inference daemon 130 and trained machine learning model(s) 132 can generate the inferences *sua sponte; e.g.,* without receiving an inference request.

After generating the inference(s), inference daemon 130 and/or trained machine learning model(s) 132 can provide the inference(s) to one or more other software components of software architecture 100; *e.g.,* one or more of database application 140, audio/video application 142), browser application 144, memory manager 162, process scheduler 164, input/output scheduler 166, and system resource manager 168. Upon reception of one or more inferences, a software component of software architecture 100 can use that inference to control performance of one or more operations, such as discussed herein; *e.g.,* in the context of scenario 400 below. While executing, a non-kernel component can perform one or more operations; e.g., non-kernel operations to carry out a task. For example, inference daemon 130 and trained machine learning model(s) 132 can perform non-kernel operations including, but not limited to, receiving input data, receiving inference requests, generating inferences, generating inference responses, and providing inferences.

Database application 140 can provide access to one or more databases; e.g., enable read, write, update, delete, etc. operations on data stored in the database. One feature of transactional database applications, such as database application 140, is an "atomic commit" of a database which means that either all database changes within a single transaction occur or none of them occur. One technique for providing an atomic commit called write ahead logging (WAL), where database application 140 can write data changes to a checkpointing journal while the database remains unchanged. When an atomic commit is requested, a special record indicating a commit is appended to the checkpointing journal. As such, database readers can continue reading from the unchanged database while changes are simultaneously being committed into the checkpointing journal. In some cases, multiple database transactions can be stored in the checkpointing journal. Then, to update the database, database application 140 can perform a "checkpoint", where the data changes in the checkpointing journal are applied to and saved in the database. In some examples, database application 140 can use write ahead logging with checkpointing of databases during its operation. In particular of these examples, database application 140 can use a heuristic to determine when to checkpoint the database; e.g., perform a checkpoint when the checkpointing journal reaches a predetermined size. As such, database application 140 can perform non-kernel operations including, but not limited to, creating a database, modifying a database, reading data from a database, writing data to a database, committing data to a database, performing database transactions logging database transactions, performing atomic commits, checkpointing a database, executing heuristics, requesting inferences, receiving inferences, and utilizing heuristics and/or and inferences during execution.

Audio/video application 142 can provide access to audio content and/or video content, including replay of stored audio and/or video content, display of still and/or video imagery, and render and subsequently provide text, graphics, images, sounds and/or other output. In some examples, audio/video application 142 can use one or more buffers during its operation. The use of multiple buffers can increase throughput of the audio and/or video content, while adversely affecting latency. In an audio context, audio latency can refer to a period of delay (usually measured in milliseconds) between when an audio signal arrives at audio/video application 142 and when the audio signal is actually provided or played by audio/video application 142. A certain amount of latency, known as audio buffering, can be used to ensure that playback, recording and processing results in an error-free audio stream without dropouts or glitches. A tradeoff occurs in that smaller buffer sizes lead to lower latency, but smaller buffer sizes may cause dropouts or glitches, so an optimal buffer size would be a buffer size as small as possible without impairing the audio quality.

In a video context, buffering rendered graphical displays, such as double buffering, can be used to reduce or eliminate undesirable visual artifacts. In double buffering, audio/video application 142 can first store results of rendering operations in a "back buffer". When the rendering operations are considered complete, audio/video application 142 can copy part or all of the back buffer to a "front buffer" and can display contents of the front buffer. Copying from the back buffer to the front buffer can be synchronized with a refresh cycle to avoid tearing artifacts. Double buffering necessarily uses more memory and CPU time than single buffering because of the system memory allocated for the back buffer, the time for the copy operation, and the time waiting for synchronization.

Audio/video application 142 can use one or more heuristics to determine a size of and/or a number of memory buffers to store part or all of the audio and/or video content. In some examples, audio/video application 142 can allocate buffering memory for providing audio and/or video content in terms of allocating a number of buffers of predetermined sizes e.g., buffers or storing a predetermined number of pixels of content, buffers for storing a predetermined amount of (uncompressed) audio content, buffers for storing predetermined number of bytes, etc. Then, changing a buffer size by audio/video application 142 can be performed by allocating and/or deallocating buffers of these predetermined sizes. As such, audio/video application 142 can perform non-kernel operations including, but not limited to, receiving audio and/or video content, providing audio and/or video content, buffering audio and/or video content, allocating buffers, changing buffer sizes, deallocating buffers, executing heuristics, requesting inferences, receiving inferences, and utilizing heuristics and/or and inferences during execution.

Another non-kernel software example relates to a compiler. A compiler is a software application that translates software instructions in a programming language to machine-executable instructions. Some compilers are just-in-time (JIT) compilers, which can translate programming language instructions to machine-executable instructions during runtime for at least part some programming language instructions for a process. Some JIT compilers use tracing just-in-time compilation techniques, which can involve recording a linear sequence of frequently executed operations, compiling them to native machine code and executing them. Tracing JIT compilers are based on an assumption that programs spend most of their time in some loops of the program termed "hot loops" and subsequent loop iterations often take similar paths. Tracing JIT compilers can use one or more hot-loop heuristics to classify portions of execution traces as hot loops.

Some compilers are embedded within another application - for example, FIG. 1 shows just-in-time compiler 146 embedded with browser application 144. In other examples, a just-in-time compiler can be a standalone application, such as shown by just-in-time compiler 148. As such, just-in-time compiler 148 can be used by browser application 144 and/or other software applications; *e.g.,* database application 140, audio/video application 142, an e-mail application, a map application, a ride-sharing application, etc.

Browser application 144 can be a web browser usable for obtaining and displaying content, including remotely stored content; *e.g.,* content available via the Internet. In some cases, the remotely stored content can include and/or be associated with programming language instructions. Then, just-in-time compiler 146 (and/or just-in-time compiler 148) can read the programming language instructions as an input and translate the input programming language instructions into output machine-executable instructions executable on a (virtual) computing device. In some examples, just-in-time compiler 146 (and/or just-in-time compiler 148) can include a tracing JIT compiler and can have one or more hot-loop heuristics to classify portions of execution traces as hot loops. As such, browser application 144 and just-in-time compiler 146 (and/or just-in-time compiler 148) can perform non-kernel operations including, but not limited to, obtaining content (perhaps from a remote computing device), displaying received content, compiling programming language instructions, interpreting compiling programming language instructions, performing tracing just-in-time compilation techniques, executing machine-executable instructions, detecting hot loops, executing heuristics, requesting inferences, receiving inferences, and utilizing heuristics and/or and inferences during execution.

Kernel memory space 120 includes memory for kernel software for an operating system kernel executing on the computing device. Part or all of a software executable configured to execute in kernel memory space 120 can be termed a kernel component. FIG. 1 illustrates kernel memory space 120 of software architecture 100 with examples of kernel components including memory manager 162, process scheduler 164, input/output scheduler 166, and system resource manager 168. More, fewer, and/or different examples of kernel components are possible as well. While executing, a kernel component can perform one or more "kernel operations" or activities related to carrying out one or more tasks of the kernel component. In some examples, part of the functionality of operating system kernel 160 can be performed using non-kernel components; *e.g.,* file system, and/or device driver software components related to operating system kernel 160 can be non-kernel components executing in non-kernel memory space 110. In particular of these examples, part or all of the herein-described functionality of input/output scheduler 166 can be performed using non-kernel components.

Memory manager 162 can "manage" or control access to part or all of the memory available on the computing device by performing one or more kernel operations. For example, memory manager 162 can perform kernel operations including, but not limited to, allocating memory, deallocating memory, adding cache entries to one or more caches of memory, evicting cache entries from the one or more caches of memory, joining blocks of memory, splitting blocks of memory, allocating slabs of memory, deallocating slabs of memory, resizing slabs of memory, providing a compressed block device for compressing memory frames / memory pages and decompressing memory frames / memory pages, maintaining data related to memory management, executing heuristics, requesting inferences, receiving inferences, and utilizing heuristics and/or and inferences during execution.

While managing memory, memory manager 162 can use one or more heuristics. In one example, these heuristics can include one or more cache-related heuristics to manage a cache of memory, where the cache can include a predetermined amount of relatively-fast storage; *e.g.,* a hardware cache that is relatively fast compared to main memory, a memory buffer acting as a cache that is relatively fast compared to a file storage device. The cache can store one or more "cache entries" or data items. While managing the cache, memory manager 162 can receive new cache entries to be stored in the cache. When a new cache entry arrives, memory manager 162 can select one or more cache entries "eviction" or removal from the cache to make room for the new cache entry. The cache-related heuristic(s) can determine various values associated with determining cache entries for eviction; *e.g.,* a cache priority value for each cache entry in the cache based on cache entry access times, cache entry arrival times, and/or other cache-related data.

In another example, memory manager 162 can manage a relative-large virtual memory space with a relatively-small amount of physical memory; *e.g.,* a predetermined amount of volatile memory, such as random access memory (RAM). Memory manager 162 can divide both virtual memory and physical memory into memory pages or frames of a pre-determined size *(e.g.,* 4 kilobytes, 8 kilobytes) - the term memory page is often used for data stored in secondary storage *(e.g.,* flash memory, disk space), while the term memory frame is often used for data in physical memory. Each page of virtual memory may be "backed by" or associated with a corresponding frame of physical memory and/or a relatively large "backing store", or predetermined amount of secondary memory storing memory pages. The backing store can store pages that have been "paged out" or removed from the physical memory, thereby providing storage that allows a memory system to the relatively-larger virtual memory space.

Since the virtual memory space is larger than physical memory space, a memory page can be "paged in" from the backing store to a memory frame to provide a process with access to the memory page/frame and a memory frame can be "paged out" to a memory page of the backing store when the process no longer accesses the memory page/frame. For a program to access any part of a virtual memory page, the virtual memory page should be backed by a frame in physical memory. However, a "page fault" can occur if a process attempts to access a virtual memory page which is not at that moment backed by a memory frame. When a page fault occurs, the kernel can suspend the process, page in a requested page of memory, and resume the process - from the process' point of view, the page (or frame) was in physical memory all along. However, the elapsed execution time for the process that has a page fault is often much longer, since the kernel normally has to perform relatively-slow input-output operations to page in the requested page.

Memory manager 162 can provide memory pages and/or memory frames for virtual memory using one or more page-allocation heuristics, such as a "buddy allocator" that divides physical memory into memory blocks, where each memory block can a power of two *(e.g.,* 2, 4, 8, 16 ...) number of frames. Upon receiving a request for memory of size SZ1, memory manager 162 can determine whether a block of size SZ1 is available. If a block of size SZ1 is not available, memory manager 162 can split a memory block whose size is larger than SZ1 can into a pair of blocks and the two blocks of the pair are classified as "buddies". One of the pairs of blocks can then be allocated to honor the request for memory and the other block can remain "free" or unallocated. Memory manager 162 can halve memory blocks as necessary until a memory block of size SZ1 is made available. When a memory block is later deallocated, memory manager 162 can examine a buddy of the deallocated block - if both blocks are free, memory manager 162 can join the two memory blocks into a larger memory block.

Memory manager 162 can use one or more slab-related heuristics related to allocation, resizing, and deallocation of "slabs" of memory. A slab of memory can be a block of memory that stores one or more commonly used kernel objects that are kept in an initialized state; *e.g.,* objects representing processes, kernel queue entries, etc. Slab allocation aims to cache commonly used freed kernel objects to preserve structure of the freed kernel object between uses. Slab allocation can save the kernel time and resource churn for allocating, initializing, and freeing commonly-used kernel objects.

Memory manager 162 can use one or more compression-related heuristics for managing a compressed block device; *e.g.,* a dynamically allocated area of RAM managed as a virtual device. The compressed block device can store data, such as memory frames, in compressed form, thereby storing more information and to enable faster access to memory frames in comparison to memory pages stored in secondary memory. The use of compressed block devices can lead to reduced access to secondary memory and so can reduce a number of read/write cycles for devices providing secondary memory, thereby lengthening lifespans of these devices.

The amount of time required to compress, and to later decompress, data stored on the compressed block device is often roughly proportional to the number of bytes being compressed or decompressed. Since the size of a memory frame is fairly large, memory frame compression and decompression can be relatively expensive operations. Thus, memory manager 162 should carefully select memory frames to be compressed or decompressed, such as a memory frame that is likely to be used again but not likely to be used in the near future to avoid repeatedly performing the expensive operations of compressing and then decompressing pages. The compression-related heuristic(s) can include a selection heuristic, such as a least-recently-used heuristic or first-in-first-out heuristic, that memory manager 162 can use to select memory frames stored on a compressed block device for decompression and/or to select memory frames for compression and storage on the compressed block device.

Process scheduler 164 can control access to one or more processors of the computing device by scheduling processes for execution by the one or more processors by performing one or more kernel operations. For example, process scheduler 164 can perform kernel operations including, but not limited to, scheduling processes for execution, selecting processes for execution, initiating execution of a process, pausing execution of a process, terminating execution of a process, maintaining process scheduling related data, determining one or more priorities related to the processes, determining time slices for the processes, executing heuristics, requesting inferences, receiving inferences, and utilizing heuristics and/or and inferences during execution. A time slice for a process can indicate a maximum amount of time that the process can be executed by the one or more processors without interruption. Then, process scheduler 164 can select a process for execution based on the priorities and then allow the selected process to execute on at least one of the one or more processors for a period of time based on the time slice for the selected process. In scheduling processes, process scheduler 164 can use one or more heuristics to determine time slice values for processes (dynamic) priority values for processes, processor affinity values associating processes with one or more processors of a computing device, and perhaps other values.

Input/output scheduler 166 can manage access to one or more input and/or output devices of the computing device by performing one or more kernel operations. For example, input/output scheduler 166 can perform kernel operations including, but not limited to, determining which requests for input/output devices to fulfill, in what order and for what amount of time, such that the system overall has high throughput and low latency, selecting a process to use an input device and/or an output device, pausing use of an input device and/or an output device by a process, terminating use of an input device and/or an output device by a process, maintaining data related to managing access to the one or more input and/or output devices, executing heuristics, requesting inferences, receiving inferences, and utilizing heuristics and/or and inferences during execution. Examples of these input and/or output devices include block storage devices; *e.g.,* flash drives, disks, redundant arrays of independent disks (RAIDs), block storage devices arranged as one or more storage area networks (SANs), etc.

In some examples, input/output scheduler 166 can use one or more input-output related heuristics to characterize a process requesting access to an input and/or output device and to determine priorities of processes for scheduling access to an input and/or output device. For example, input/output scheduler 166 can use the input-output related heuristic(s) to characterize processes as "baseline", "interactive" and/or "soft real-time". Interactive and/or soft-real time processes can require very low latency and should thus have their I/O requests serviced with higher priority. Such can be user-facing applications, especially multimedia applications such as video and audio players, where introducing extra latency can cause playback to be undesirably interrupted. Baseline processes can have a lower priority than either interactive or soft real-time processes. Then, input/output scheduler 166 can use that characterization in determining a priority for accessing the input and/or output device. Input/output scheduler 166 can select a process to access an input and/or output device based on the priorities of all processes requesting access to the input and/or output device. In some examples, the input-output related heuristic(s) can include one or more heuristics to directly determine a priority of a process requesting access to an input and/or output device. In some examples, characterization heuristics can be vulnerable to false positives from applications that would not benefit significantly from the higher I/O priority but still reduce I/O device usage by other processes.

System resource manager 168 can manage resources of the computing device by performing one or more kernel operations. For example, system resource manager 168 can perform kernel operations including, but not limited to, generating a resource bucket, specifying resources associated with a resource bucket, modifying a resource bucket, deleting a resource bucket, assigning a resource bucket to a process, maintaining data related to resource buckets, executing heuristics, requesting inferences, receiving inferences, and utilizing heuristics and/or and inferences during execution.

For example, system resource manager 168 can determine one or more resource buckets, where each resource bucket specifies resources available for a process. Then, system resource manager 168 can assign each process to a resource bucket, thereby controlling resources available to the process. As another example, the system resource manager can manage system resources by statically generating a number of resource buckets specifying resources available for a process, and then dynamically assigning each process to one of the number of resource buckets using a system resource management heuristic. As an example, the resource buckets can have five standard sizes: (1) an extra small size, which is associated with an extra-small set of resource limits that specify a minimum amount of resources, (2) an small size, which is associated with a small set of resource limits that is larger than the extra-small set of resource limits, (3) a medium size, which is associated with a medium set of resource limits that is larger than the small set of resource limits, (4) a large size, which is associated with a large set of resource limits that is larger than the medium set of resource limits, and (5) an extra-large size, which is associated with an extra-large set of resource limits that is larger than the large set of resource limits, and so specifies a maximum amount of resources associated with a resource bucket for this example. The use of resource buckets can be seen in power, thermal, and other types of systems. However, if current resource requirements of a system resource fall between two buckets, then the system resource may not be utilized as intended by the static selection of the resource buckets. Also, if a process is assigned to a resource bucket incorrectly, the process may not have enough resources, or have access to too many resources.

Software executing in non-kernel memory space 110 of the computing device can communicate with software executing in kernel memory space 120 using a predetermined interface, such as a file interface provided using kernel and non-kernel accessible files / data (KNKD) 150. For example, operating system kernel 160 can provide certain kernel data for reading and writing via one or more files; *e.g.,* files having predetermined names made available using a sysfs (/sys directory) and/or a procfs (/proc directory) file system interface As such, kernel and non-kernel accessible files / data 150 can include one or more files, memory buffers, and/or other data items; *e.g.,* files with kernel data made available using a /procfs and/or /sysfs interface to non-kernel software, one or more files of inferences provided by inference daemon 130, application-specific input data. Using the file interface provided using kernel and non-kernel accessible files / data 150 allows for sharing of information, such as input data and/or inferences, between software components without creating significant new software interfaces, such as new system calls, which can eliminate the time, software errors, and expense involved with developing such new software interfaces.

Kernel and non-kernel accessible files / data 150 can include input data provided by software executing in non-kernel memory space 110 *(e.g.,* application-specific input data) and/or input data provided by software executing in kernel memory space 120 *(e.g.,* kernel-related input data). Inference daemon 130 can obtain the input data from kernel and non-kernel accessible files / data 150 (and perhaps from other sources) and provide the input data to trained machine learning model(s) 132. Using the input data, trained machine learning model(s) 132 can generate one or more inferences. The one or more inferences can be provided by inference daemon 130 and trained machine learning model(s) 132 to kernel and non-kernel software in software architecture 100 using one or more inference files (or other data structures) of kernel and non-kernel accessible files / data 150.

Since files in kernel and non-kernel accessible files / data 150 are persistent data structures, inferences (which may include inference values) that are written to the inference file(s) retain their previous values until written again. As such, a kernel component or non-kernel component seeking inference values, can read the inference values from the inference file(s) without waiting for a new inference; that is, inference daemon 130 and trained machine learning model(s) 132 can write inferences to the inference file(s) and kernel components and/or non-kernel components can read the inferences from the inference file(s) asynchronously. Further, if the inference daemon 130 and trained machine learning model(s) 132 are relatively slow in comparison to the kernel component or non-kernel component, the kernel component or non-kernel component can read the inference(s) from the inference file(s) and use the existing (and likely slightly outdated) inference values from the inference file(s) without waiting for new inferences. Avoiding waiting for inferences can allow the kernel component or non-kernel component to react quickly while performing a task; *i.e.,* in contrast to waiting for a synchronous interface between inference daemon 130 / trained machine learning model(s) 132 and kernel component and non-kernel components. In some example(s), some or all of the inference file(s) can be in different file systems than the sysfs and/or the procfs file system interface; e.g., inference file(s) associated with non-kernel software components can be located in another file system, directory, folder, or related structure of files than specified by the sysfs and/or the procfs file system interface.

In other examples, other data structures and/or objects other than files can be used to communicate input data for trained machine learning model(s) 132 and/or inferences made by trained machine learning model(s) 132 to kernel components and non-kernel components. For example, a kernel object can be utilized by kernel components and/or non-kernel components to provide operations / methods that allow access to persistent data stored by the kernel; *e.g.,* the methods of the kernel object can provide access to the persistent data stored by the kernel via handles, pointers, or other references to the persistent data. In some of these examples, the kernel object can provide access to a file and thereby provide access to the persistent data stored by the kernel via a reference to the file; while in other of these examples, the kernel object can provide access to a buffer or other region of memory and thereby provide access to the persistent data stored by the kernel via a reference to the buffer or other region of memory. As such, the use of kernel objects can enable asynchronous access to input data and/or inferences by both kernel components and non-kernel components.

In other examples, a synchronized interface can deliver inferences from trained machine learning model(s) 132 at predetermined time intervals and/or within a predetermined amount of time from requesting an inference - such a synchronized interface can be used along with or instead of asynchronous inferences. In even other examples, inferences can be communicated using one or more other software interfaces, such as application program interfaces (APIs) and/or related kernel software interfaces.

In some examples, one or more kernel components and/or application programs can turn off part or all of trained machine learning model(s) 132 during run time. In related examples, part or all of trained machine learning model(s) 132 can be turned off during compilation; e.g., during compilation of inference daemon 130.

As shown in FIG. 1, trained machine learning model(s) 132 can be separated from other software components of software architecture 100, including kernel components. Separation of trained machine learning model(s) 132 can involve executing inference daemon 130 (and therefore trained machine learning model(s) 132) in non-kernel memory space 110, thereby separating trained machine learning model(s) 132 from kernel components executing in kernel memory space 120; e.g., memory manager 162, process scheduler 164, input/output scheduler 166, system resource manager 168, other components (not shown in FIG. 1) of operating system kernel 160. Executing trained machine learning model(s) 132 in non-kernel memory space 110 also can enable use of user space libraries/frameworks for machine learning. Separation of trained machine learning model(s) 132 from operating system kernel 160 can allow for fewer kernel modifications and less kernel software, thereby reducing related security risks and kernel resource requirements.

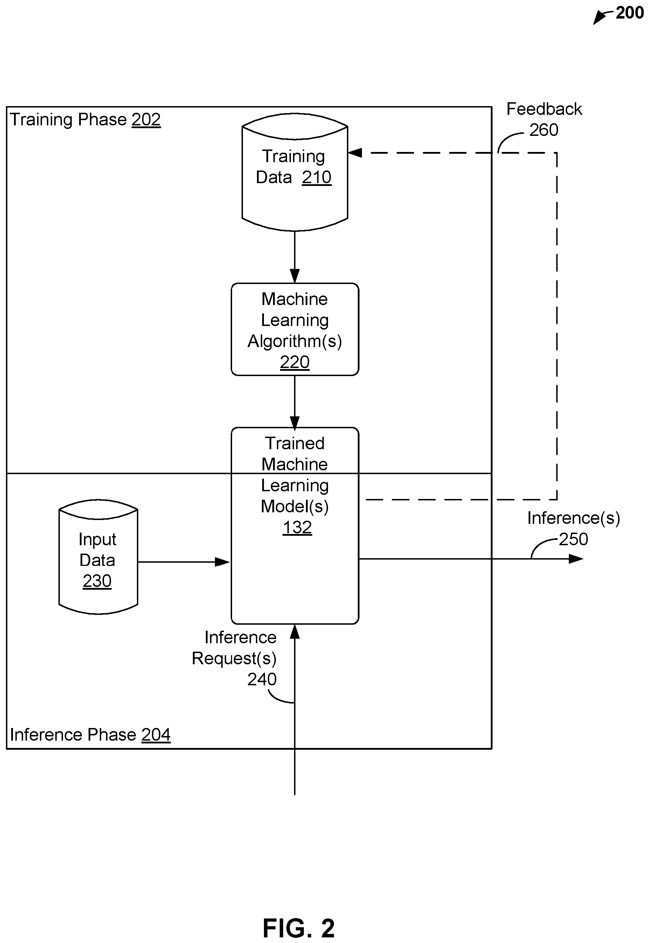

FIG. 2 shows diagram 200 illustrating training phase 202 and inference phase 204 of trained machine learning model(s) 132, in accordance with some example embodiments. Trained machine learning model(s) 132 can include one or more models of one or more machine learning algorithms 220. Machine learning algorithm(s) 220 may include, but are not limited to: an artificial neural network, a Bayesian network, a hidden Markov model, a Markov decision process, a logistic regression function, a support vector machine, a suitable statistical machine learning algorithm, and/or a heuristic machine learning system. Machine learning algorithm(s) 220 may be supervised or unsupervised, and may implement any suitable combination of online and offline learning.

In some examples, machine learning algorithm(s) 220 can include a recurrent artificial neural network. In some examples, machine learning algorithm(s) 220 and/or trained machine learning model(s) 132 can be accelerated using on-device coprocessors, such as graphic processing units (GPUs), tensor processing units (TPUs), digital signal processors (DSPs), and/or application specific integrated circuits (ASICs). Such on-device coprocessors can be used to speed up machine learning algorithm(s) 220 and/or trained machine learning model(s) 132 and, thereby, speed up inference daemon 130. In some examples, trained machine learning model(s) 132 can be trained, reside and execute to provide inferences on a particular computing device, and/or otherwise can make inferences for the particular computing device.

During training phase 202, machine learning algorithm(s) 220 can be trained by providing at least training set 210 of data as training input using unsupervised, supervised, semi-supervised, and/or reinforcement learning techniques. Unsupervised learning involves providing a portion (or all) of training set 210 of data to machine learning algorithm(s) 220 and machine learning algorithm(s) 220 determining one or more output inferences based on the provided portion (or all) of training set 210 of data. Supervised learning involves providing a portion of training set 210 of data to machine learning algorithm(s) 220, with machine learning algorithm(s) 220 determining one or more output inferences based on the provided portion of training set 210 of data, and the output inference(s) are either accepted or corrected based on correct results associated with training set 210 of data. In some examples, supervised learning of machine learning algorithm(s) 220 can be governed by a set of rules and/or a set of labels for the training input, and the set of rules and/or set of labels may be used to correct inferences of machine learning algorithm(s) 220.

Semi-supervised learning involves having correct results for part, but not all, of training set 210 of data. During semi-supervised learning, supervised learning is used for a portion of training set 210 of data having correct results, and unsupervised learning is used for a portion of training set 210 of data not having correct results. Reinforcement learning involves machine learning algorithm(s) 220 receiving a reward signal regarding a prior inference, where the reward signal can be a numerical value. During reinforcement learning, machine learning algorithm(s) 220 can output an inference and receive a reward signal in response, where machine learning algorithm(s) 220 are configured to try to maximize the numerical value of the reward signal. In some examples, reinforcement learning also utilizes a value function that provides a numerical value representing an expected total of the numerical values provided by the reward signal over time. In some examples, machine learning algorithm(s) 220 and/or trained machine learning model(s) 132 can be trained using other machine learning techniques, including but not limited to, incremental learning and curriculum learning.

In some examples, machine learning algorithm(s) 220 and/or trained machine learning model(s) 132 can use transfer learning techniques. For example, transfer learning techniques can involve trained machine learning model(s) 132 being pre-trained on one set of data and additionally trained using training set 210 of data. More particularly, machine learning algorithm(s) 220 can be pre-trained on data from one or more computing devices and a resulting trained machine learning model provided to computing device CD1, where CD1 is intended to execute the trained machine learning model during inference phase 204. Then, during training phase 202, the pre-trained machine learning model can be additionally trained using training set 210 of data, where training set 210 of data can be derived from kernel and non-kernel data of computing device CD1. This further training of the machine learning algorithm(s) 220 and/or the pre-trained trained machine learning model using training set 210 of data of CD1's data can be performed using either supervised or unsupervised learning. Once machine learning algorithm(s) 220 and/or the pre-trained machine learning model has been trained on at least training set 210 of data, training phase 202 can be completed. The trained resulting machine learning model can be utilized as at least one of trained machine learning model(s) 132.

In particular, once training phase 202 has been completed, trained machine learning model(s) 132 can be provided to a computing device, if not already on the computing device. Then, after trained machine learning model(s) 132 are provided to computing device CD1, perhaps as part of software for inference daemon 130, then inference phase 204 can begin.

During inference phase 204, trained machine learning model(s) 132 can receive input data 230 and generate and output one or more corresponding inferences 250 about input data 230. As such, input data 230 can be used as an input to trained machine learning model(s) 132 for providing corresponding inference(s) 250 to kernel components and non-kernel components. For example, trained machine learning model(s) 132 can generate inference(s) 250 in response to one or more inference requests 240. In some examples, trained machine learning model(s) 132 can be executed a portion of other software; *e.g.,* trained machine learning model(s) 132 can be executed a portion of inference daemon 130. Input data 230 can include data from computing device CD1 executing trained machine learning model(s) 132 and/or input data from one or more computing devices other than CD1.

Input data 230 can include kernel-related input data, application-specific input data, and/or other input data; *e.g.,* user-provided data. The kernel-related input data can include data related to computing device CD1 executing and utilizing the kernel. The application-specific input data can include, but is not limited to, database-related input data, audio-video-related input data, and compiler-related input data. The user-provided data can include data received via a graphical user interface (GUI) or other user interface; *e.g.,* commands, text, selections of graphical objects, etc. In other examples, more, less, and/or different kernel-related data, application-specific data, and/or user-provided data can be used as well. Use of input data 230 from various data sources can enable trained machine learning model(s) 132 to make more holistic decisions than decisions made using heuristics.

Input data 230 can be collected over a predetermined amount of time *(e.g.,* an amount of time between approximately 100 milliseconds and ten seconds) and then provided to trained machine learning model(s) 132. That is, trained machine learning model(s) 132 can receive successive batches of input data 230 (and perhaps other data) and generate corresponding inferences at intervals of time, where the intervals of time are specified in terms of a set quantum / predetermined amount of time. For example, a batch of input data 230 can be collected during one quantum of time. Once collected, the batch of input data 230 can be provided to trained machine learning model(s) 132 and trained machine learning model(s) 132 can generate one or more inferences based at least on the batch of input data 230 provided during the quantum of time. This batch collection and corresponding inference generation procedure can be repeated for multiple intervals of time.

As an example, the kernel-related input data and/or the application-specific input data of input data 230 can be collected after execution of a predetermined number of kernel-related operations, such as time slices, context switches, memory accesses, input device operations, and/or output device operations. In particular, the kernel-related input data can be collected after between one and several hundred time slices or context switches. In some examples, inference daemon 130 and/or trained machine learning model(s) 132 can be provided with an input, such as a software interrupt, to inform inference daemon 130 and/or trained machine learning model(s) 132 about newly-available input data for use as input data 230.

Inference(s) 250 can include values and/or indications produced by trained machine learning model(s) 132 operating on input data 230 (and training set 210 of data). In some examples, trained machine learning model(s) 132 can use output inferences 250 as input feedback; e.g., trained machine learning model(s) 132 can also rely on past inferences as inputs for generating new inferences. In some examples, a kernel component (or non-kernel component) associated with one or more inferences generated by the batch collection and corresponding inference generation procedure can store some or all of the one or more of the generated inferences, including but not limited to, a most recently determined one of the one or more of the generated inferences; *i.e.,* the most recently determined inference can be stored in a memory location of the computing device accessible by the kernel component (or non-kernel component). In particular, when a new inference is provided to the kernel component (or non-kernel component), the kernel component (or non-kernel component) can overwrite a previously-stored most recently determined inference with the new inference.

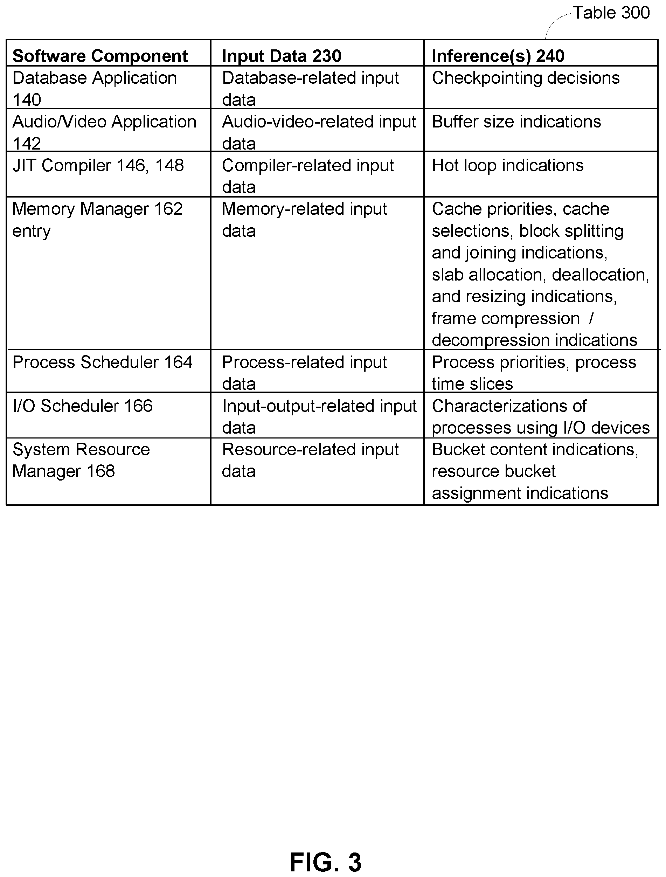

FIG. 3 shows table 300 summarizing input data and related inferences for software components of the software architecture of FIG. 1, in accordance with some example embodiments. Table 300 is reproduced herein as Table 1 below:

**Table 1**

| **Software Component** | **Input Data 230** | **Inference(s) 250** |
|---|---|---|
| Database Application 140 | Database-related input data | Checkpointing decisions |
| Audio/Video Application 142 | Audio-video-related input data | Buffer size indications |
| JIT Compiler 146, 148 | Compiler-related input data | Hot loop indications |
| Memory Manager 162 | Memory-related input data | Cache priorities, cache entry selections, block splitting and joining indications, slab allocation, deallocation and resizing indications, frame compression / decompression indications |
| Process Scheduler 164 | Process-related input data | Process priorities, process time slices |
| I/O Scheduler 166 | Input-output-related input data | Characterizations of processes using I/O devices |
| System Resource Manager 168 | Resource bucket data, application resource usage data | Bucket content indications, resource bucket assignment indications |

In table 300 and corresponding Table 1 above, the first column indicates a particular software component of software architecture 100, the second column indicates aspects of input data 230 related to the particular software component, and the third column indicates aspects of inference(s) 250 related to the particular software component.

The first three rows of table 300 and Table 1 relate to non-kernel components. Input data for making inferences for non-kernel components can include at least a portion of the kernel-related input data and at least a portion of the application-specific input data, perhaps accompanied by additional data. The first row of table 300 and Table 1 indicates that database application 140 can receive checkpointing decisions as inference(s) 250 provided by trained machine learning model(s) 132 based on trained machine learning model(s) 132 operating on input data 230 that includes, but is not limited to, database-related input data. The database-related input data can include data such as, but not limited to, database size data, database transaction data including counts, contents, and times of database transactions, and database usage data including amounts and/or timing of data associated with database transactions.

The second row of table 300 and Table 1 indicates that audio/video application 142 can receive buffer size indications as inference(s) 250 provided by trained machine learning model(s) 132 based on trained machine learning model(s) 132 operating on input data 230 that includes, but is not limited to, audio-video-related input data. The audio-video-related input data can include data such as, but not limited to, audio/video content data including sizes, counts, sources, access times, and/or contents of audio and/or video content; rendering operation data including sizes, counts, and/or contents of rendering operations, and pixel-related data, including dimensions, counts, and contents of pixels rendered by audio/video application 142 and/or by other sources.

The third row of table 300 and Table 1 indicates that just-in-time compiler 146 and/or just-in-time compiler 148 can receive hot-loop indications as inference(s) 250 provided by trained machine learning model(s) 132 based on trained machine learning model(s) 132 operating on input data 230 that includes, but is not limited to, compiler-related input data. The compiler-related input data can include data such as, but not limited to, instruction execution data, loop usage counts and/or loop trace data, and instruction profiling data.

The last four rows of table 300 and Table 1 relate to kernel components. Input data for making inferences for kernel components can include at least a portion of kernel-related input data and perhaps additional data. For example, the kernel-related input data can include memory-related input data, process-related input data, input-output-related input data, resource-related input data, and perhaps additional data.

The fourth row of table 300 and Table 1 indicates that memory manager 162 can receive cache priorities, cache entry selections, memory block splitting and joining indications, slab allocation, deallocation and resizing indications, and memory frame compression and/or decompression indications as inference(s) 250 provided by trained machine learning model(s) 132 based on trained machine learning model(s) 132 operating on input data 230 that includes, but is not limited to, memory-related input data. The memory-related input data can include, but is not limited to, caching data, including cache entries, access times when the cache entries were last accessed, memory request data, page table data, page usage data, memory access data, memory allocation/deallocation data related to slabs and/or memory blocks, memory access data such as data about a number of accesses to one or more objects in one or more slabs and/or one or more data items stored in a memory block, page, and/or frame, memory page usage and access data, memory frame usage and access data, object data related to one or more slabs, one or more slabs, one or more memory pages, one or more memory frames, other memory allocation/deallocation data, and other memory access data.

The fifth row of table 300 and Table 1 indicates that process scheduler 164 can receive process priorities and process time slices as inference(s) 250 provided by trained machine learning model(s) 132 based on trained machine learning model(s) 132 operating on input data 230 that includes, but is not limited to, process-related input data. The process-related input data can include, but is not limited to, user-defined priority values *(e.g.,* a real-time priority value and/or a user-specified "nice" priority value), dynamic scheduler-defined priority values, data about runtime behavior such as energy consumption, percentages of time slices used by processes, information about how often processes are blocked waiting for input/output device operation, processor usage data, and system load data.

The sixth row of table 300 and Table 1 indicates that input/output scheduler 166 can receive characterizations of processes using input and/or output devices as inference(s) 250 provided by trained machine learning model(s) 132 based on trained machine learning model(s) 132 operating on input data 230 that includes, but is not limited to, input-output-related input data. The input-output-related input data can include, but is not limited to, scheduling data for input and/or output devices, data about counts and usage of operations associated with input and/or output devices, and data provided to input and/or output devices.

The seventh row of table 300 and Table 1 indicates that system resource manager 168 can receive bucket content indications and resource bucket assignment indications as inference(s) 250 provided by trained machine learning model(s) 132 based on trained machine learning model(s) 132 operating on input data 230 that includes, but is not limited to, resource-related input data. Resource-related input data can include, but is not limited to, resource bucket data, information about resources associated with resource buckets, data about resource buckets assigned to processes, application resource usage data, and data about system resource availability and utilization.

In other examples, trained machine learning model(s) 132 can provide more, fewer, and/or different inferences for more, fewer, and/or different software components based on more, fewer, and/or different input data than indicated by table 300 and Table 1.

Kernel and non-kernel components, such as but not limited to, database application 140, audio/video application 142, browser application 144, just-in-time compiler 146, memory manager 162, process scheduler 164, input/output scheduler 166, and system resource manager 168, can utilize inferences from one or more trained machine learning models while retaining fast response times provided by existing heuristics. As an example, inference daemon 130 executing in non-kernel memory space 110 can execute trained machine learning model(s) 132 to provide inferences to the kernel and non-kernel software components.

Then, the kernel and non-kernel components can use the inferences to perform operations. In some examples, the kernel and non-kernel components can use the inferences along with the existing heuristics to perform operations.

As a particular example, process scheduler 164 can receive inferences from trained machine learning model(s) 132 and combine those inferences with results from its own heuristics to schedule processes. Some heuristic results of process scheduler 164 can include heuristic values for process scheduling such as, but not limited to, values related to CPU frequency scaling, load balancing, processor affinity, dynamic priority, and time. The inferences and heuristic results can be combined using efficient combination techniques so that neither inference nor heuristic results dictate the output of the process scheduler without sacrificing process scheduler 164's ability to adapt quickly to changes in system load and behavior.

An example of these efficient combination techniques includes performing a linear or other mathematical combination of inference values provided as inference results with heuristic values provided as heuristic results. More specifically, Equation (1) expresses a linear combination result value *F* that can be used to combine inference values and heuristic values: $F = {W}_{0} + {W}_{1} ∗ IV + {W}_{2} ∗ HV$

In Equation (1), *W₀, W₁,* and *W₂* represent weights for the linear combination result value F, *IV* represents an inference value provided by an inference from trained machine learning model(s) 132, and *HV* represents a heuristic value provided by a heuristic of the process scheduler. In some examples, the weights *W₀, W₁,* and/or *W₂* can be predetermined numerical values; *e.g., W₀, W₁,* and/or *W₂* can be determined at compile time or during initialization at runtime, perhaps based on user input regarding values of weights *W₀, W₁,* and/or *W₂.* Further, by setting weights *W₀, W₁,* and/or *W₂* appropriately, inference values can be either be wholly ignored or wholly emphasized. As one extreme example, if *W₀ = W₁* = 0 and *W₂ =* 1, then the result value of *F = HV* and so the inference value *IV* would be wholly ignored and the heuristic value *HV* would be wholly emphasized. As another extreme example, if *W₀ = W₂ =* 0 and *W₁* = 1, then the result value of *F = IV* and so the inference value *IV* would be wholly emphasized and the heuristic value *HV* would be wholly ignored. Many other example selections of *W₀, W₁,* and *W₂* are possible as well.

As another example, Equation (2) expresses another linear combination result value *F* that can be used to combine inference values and heuristic values: $F = {IV}_{0} + {IV}_{1} ∗ HV$ In Equation (2), *IV₀* and *IV₁* represent inference values provided by an inference from trained machine learning model(s) 132. In both Equations (1) and (2), *HV* represents a heuristic value provided by a heuristic of the process scheduler. For Equation (2), the weight *IV₁* for heuristic value *HV* is provided as an inference values by trained machine learning model(s) 132. Enabling trained machine learning model(s) 132 to determine inference value *IV₀* and in combination with weight *IV₁* allows trained machine learning model(s) 132 to "nudge" output values of the linear combination result value *F* in a particular direction over a longer period of time (hundreds to thousands of milliseconds), while heuristic values provided by process scheduler 164 can vary over much shorter time intervals to react quickly to changes in system load.

Other mathematical techniques for combining heuristic values (e.g., heuristic value *HV*) and inference values *(e.g.,* inference values *IV, IV₀* and/or *IV₁)* to determine a result value, such as *F*, possible as well. For example, a difference *D =* | *HV - IV* | can be determined, and if *D* does not exceed a predetermined threshold value or predetermined threshold percentage of *HV* (or *IV*), then a result value equal *HV* (or *IV*) can be used. However, if *D* does exceed the predetermined threshold value or the predetermined threshold percentage, then a linear combination (such as provided by Equation (1) and/or Equation (2)), non-linear combination, or other mathematical combination of can heuristic values and inference values can be used to determine the result value. As another example, one or more previous heuristic values and/or one or more previous inference values can be stored and used to determine a result value. More specifically, one selected previous value, a sum of a plurality of previous values, an average of a plurality of previous values, or other combination of a plurality of previous values can be used to determine a historical value; *e.g.,* a historical heuristic value or a historical inferred value. Then, the historical values can be combined with the current heuristic value *HV* and/or the current inference value *IV* to determine a result value using a linear combination, non-linear combination or other mathematical combination of historical values, the current heuristic value *HV* and/or the current inference value *IV*. Other examples of combining inference and heuristic results are possible as well.

As another example of combining inference and heuristic results, input/output scheduler 166 can receive inferences from the trained machine learning model to characterize processes with respect to their input/output device usage. These characterizations can include a characterization of a process as either: a baseline process associated with a baseline priority for input/output device usage, an interactive process associated with an interactive priority for input/output device usage, or a soft real-time process associated with a soft real-time priority for input/output device usage. The interactive priority and the soft real-time priorities can be higher priorities than the baseline priority, and therefore, an interactive process or a soft real-time process can have a higher priority than a baseline process. Other classifications of processes with respect to their input/output device usage and/or other inferences for input/output scheduler 166 can be provided trained machine learning model(s) 132 as well. In some examples, input/output scheduler 166 can receive inferences from trained machine learning model(s) 132 to provide input-output-priority-related inferences related to priorities of one or more processes requesting and/or utilizing one or more input and/or output devices. Then, input/output scheduler 166 can set priorities for scheduling the process(es) to use the input and/or output device(s) by combining the input-output-priority-related inferences with heuristic values in a similar fashion as discussed herein regarding process scheduler 164 including discussion of Equations (1) and (2) or utilizing only the input-output-priority-related inferences to set process priorities.

As another example of combining inference and heuristic results, system resource manager 168 can receive inferences from trained machine learning model(s) 132 that specify which resources and amounts of resources should be associated with one or more particular resource buckets. The amounts of resources specified in an inference for a particular resource bucket can be combined with amounts of resources already associated with the particular resource bucket *(i.e.,* determined using a heuristic of system resource manager 168) using a mathematical combination; e.g., a linear combination or other mathematical combination as discussed herein in the context of Equations (1) and (2).

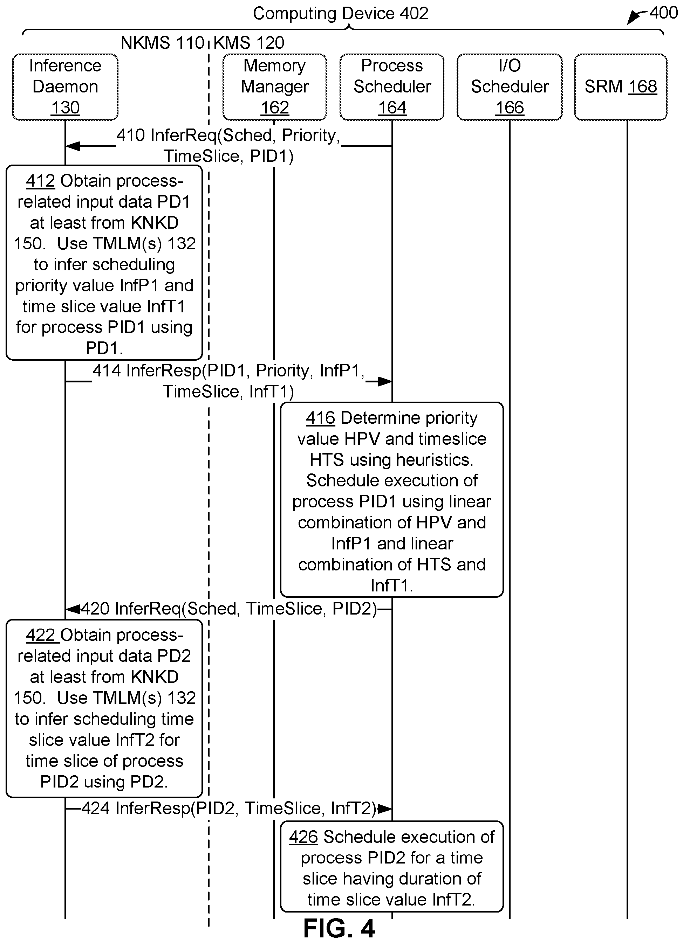

FIGS. 4, 5, 6, 7, 8, 9, 10, 11, 12, 13, 14, and 15 depict communication flows of scenario 400, where trained machine learning model(s) 132 provide inferences to software components of software architecture 100, in accordance with some example embodiments. Scenario 400 involves trained machine learning model(s) 132 providing inferences to kernel components, including memory manager 162, process scheduler 164, input/output scheduler 166, and system resource manager 168, and providing inferences to non-kernel software components, including database application 140, audio/video application 142, browser application 144, and just-in-time compiler 146.

Prior to scenario 400, trained machine learning model(s) 132 have been trained to provide at least inference(s) 250 listed in table 300 and Table 1 using training data that represents at least input data 230 listed in table 300 and Table 1 Also prior to scenario 400, trained machine learning model(s) 132 have been provided to computing device 402, which includes at least the software components listed in table 300 and Table 1; e.g., database application 140, audio/video application 142, just-in-time compiler 146, memory manager 162, process scheduler 164, input/output scheduler 166, and system resource manager 168 of software architecture 100.

During scenario 400, computing device 402 executes software for inference daemon 130 that includes trained machine learning model(s) 132. In scenario 400, inference daemon 130 receives input data for use by trained machine learning model(s) 132 to generate inferences; e.g., input data 230, from one or more files from at least from kernel and non-kernel accessible files / data 150. In scenario 400, inference daemon 130 provides the inferences generated by trained machine learning model(s) 132 as output files that are included in kernel and non-kernel accessible files / data 150. As such, inferences generated by trained machine learning model(s) 132 are accessible to both kernel components executing in kernel memory space 120 and non-kernel components executing in non-kernel memory space 110. In other scenarios, inferences generated by trained machine learning model(s) 132 can be secured so that the inferences are only available to a subset of the software components with access to kernel and non-kernel accessible files / data 150; *i.e.,* inferences can be encrypted, file protected, and/or otherwise protected so that only a requesting software component or other subset of the software components can access the inferences.

FIG. 4 shows that scenario 400 begins with process scheduler 164 providing inference request 410 to inference daemon 130. Inference request 410 requests an inference about a priority value and a time slice value for a process PID1. After receiving inference request 410, inference daemon 130 and trained machine learning model(s) 132 obtain process data PD1, which includes at least process-related input data of computing device 402, at least from kernel and non-kernel accessible files / data 150, as indicated at block 412. Then, trained machine learning model(s) 132 use PD1 as input data to infer a scheduling priority value InfP1 and a time slice value InfT1 for process PIDI, as also indicated at block 412. Inference daemon 130 then sends inference response 414 to process scheduler 164 providing the requested inference including priority value InfP1 and time slice value InfT1 for process PID1.

During scenario 400, process scheduler 164 continues to perform operations, including but not limited to scheduling processes, while waiting for inferences; e.g., waiting for inferences during an interval of time between providing inference request 410 to inference daemon 130 and receiving inference response 414; that is, trained machine learning model(s) 132 determine the inference provided in inference response 414 asynchronously with operations performed by process scheduler 164.

After receiving inference response 414, block 416 of FIG. 4 indicates that process scheduler 164 determines heuristic priority value HPV and heuristic time slice value HTS using one or more heuristics and schedules execution of process PID1 using a first linear combination of inferred priority value InfP1 and heuristic priority value HPV and a second linear combination of inferred time slice value InfT1 and heuristic time slice value HTS; *e.g.,* using a linear combination technique based on Equation (1) and/or Equation (2).

Then, process scheduler 164 provides inference request 420 to inference daemon 130 requesting an inference about a time slice value for a process PID2. Block 422 indicates that, after receiving inference request 420, inference daemon 130 and trained machine learning model(s) 132 obtain process data PD2, which includes at least process-related input data of computing device 402, at least from kernel and non-kernel accessible files / data 150. Then, trained machine learning model(s) 132 use PD2 as input data to infer a time slice value InfT2 for process PID2, as indicated at block 422. Inference daemon 130 then sends inference response 424 to process scheduler 164 providing the requested inference including time slice value InfT2 for process PID2. After receiving inference response 424, block 426 of FIG. 4 indicates that process scheduler 164 schedules execution of process PID2 for a time slice whose duration is that of inferred time slice value InfT2.

In other scenarios, process scheduler 164, process PID1, and/or process PID2 can generate an output of computing device 402, where the output can be a visual output, an audio output, a haptic output, or a combination thereof. For example, suppose process PID2 is a process executing a gaming application. Then, after process scheduler 164 schedules execution of process PID2 for a time slice whose duration is that of inferred time slice value InfT2, process PID2 can generate one or more outputs of computing device 402; e.g., game-related images, sounds, vibrations, etc.

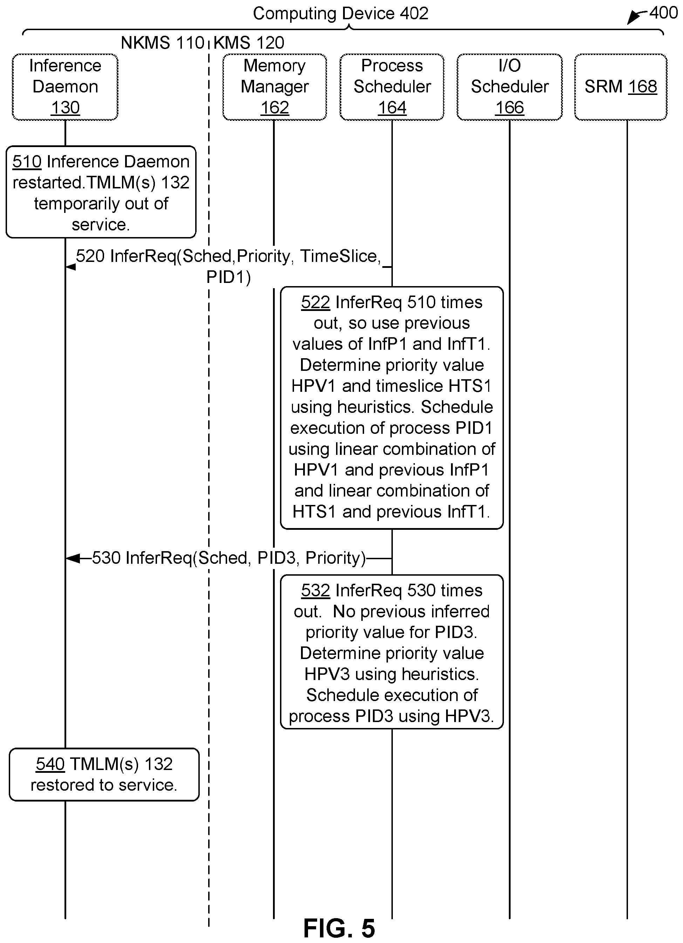

Block 510 of FIG. 5 indicates that inference daemon 130 is restarted, temporarily removing trained machine learning model(s) 132 from service and therefore unable to provide inferences. While inference daemon 130 is being restarted, process scheduler 164 sends inference request 520 to inference daemon 130 requesting an inference about a priority value and a time slice value for process PID1. As indicated by block 522 of FIG. 5, inference request 520 times out. Then, process scheduler 164 determines heuristic priority value HPV1 and heuristic time slice value HTS1 using one or more heuristics. And, process scheduler 164 schedules execution of process PID1 using a third linear combination of previously-determined inferred priority value InfP1 and heuristic priority value HPV1 and a fourth linear combination of previously-determined inferred time slice value InfT1 and heuristic time slice value HTS1; *e.g.,* using a linear combination technique based on Equation (1) and/or Equation (2).

Also while inference daemon 130 is being restarted, process scheduler 164 sends inference request 530 to inference daemon 130 requesting an inference about a priority value for a process PID3. As indicated by block 532 of FIG. 5, inference request 530 times out. Then, process scheduler 164 determines heuristic priority value HPV3 using one or more heuristics and then schedules execution of process PID3 using priority value HPV3. Only heuristic priority value HPV3 was used to schedule process PID3 since no previous inferred priority values were available for PID3 and trained machine learning model(s) 132 is temporarily unable to provide inferences. Then, as indicated by block 540 of FIG. 5, inference daemon 130 is restored to service.

In other scenarios, inference daemon 130 and trained machine learning model(s) 132 can generate inference responses, such as inference responses 414 and 424, without receiving corresponding inference requests. For example, inference daemon 130 and trained machine learning model(s) 132 can continually provide inferences based on a set time quantum (e.g., a quantum between approximately one hundred milliseconds and ten seconds) to process scheduler 164. Then, process scheduler 164 can use one or more most-recent inferences of the continually-provided inferences provided by inference daemon 130 and trained machine learning model(s) 132 to perform one or more kernel operations; e.g., scheduling processes. In some cases, the continually-provided inferences provided by inference daemon 130 and trained machine learning model(s) 132 based on the set time quantum can include inference values including priority values and/or time-slice values.

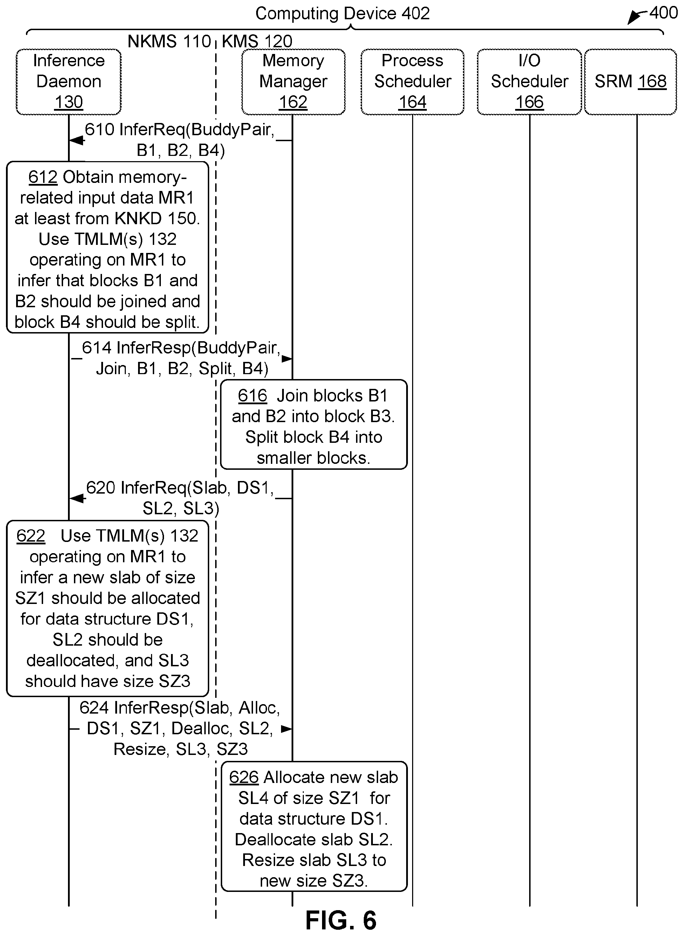

FIG. 6 indicates that scenario 400 continues with memory manager 162 sending inference request 610 to inference daemon 130. Inference request 610 requesting an inference related to joining and/or splitting buddy pairs related to memory blocks B1, B2, and B4. After receiving inference request 610, block 622 indicates that inference daemon 130 and trained machine learning model(s) 132 obtain MR1, which includes at least memory-related input data for computing device 402, at least from kernel and non-kernel accessible files / data 150. Then, trained machine learning model(s) 132 use MR1 as input data to infer that blocks B1 and B2 should be joined and to infer that block B4, as also indicated at block 622. Inference daemon 130 then sends inference response 614 to memory manager 162 providing the requested inference regarding blocks B1, B2, and B4. After receiving inference response 614, block 616 of FIG. 6 indicates that memory manager 162 joins blocks B1 and B2 into a larger block B3 and indicates that memory manager 162 splits block B4 into two or more smaller blocks.

During scenario 400, memory manager 162 continues to perform operations, including but not limited to: managing memory, joining memory blocks, splitting memory blocks, adding cache entries, evicting cache entries, providing virtual memory, compressing memory pages/frames, decompressing memory pages/frames, while waiting for inferences; e.g., waiting for inferences during an interval of time between providing inference request 610 to inference daemon 130 and receiving inference response 614; that is, trained machine learning model(s) 132 determine the inference provided in inference response 614 asynchronously with operations performed by memory manager 162.

Then, memory manager 162 provides inference request 620 to inference daemon 130 requesting an inference related to slab allocation/deallocation/resizing for a data structure DS1 and for two slabs SL2 and SL3. After receiving inference request 620, inference daemon 130 and trained machine learning model(s) 132 use MR1 as input data to infer that: a new slab of size SZ1 should be allocated to store copies of data structure DS1, slab SL2 should be deallocated, and slab SL3 should be resized to have size SZ3, as indicated at block 612. Inference daemon 130 then sends inference response 624 to memory manager 162 providing the requested inference about data structure DS1 and slabs SL2 and SL3. After receiving inference response 624, block 626 of FIG. 6 indicates that memory manager 162: allocates a new slab of size SZ1 to store copies of data structure DS1, deallocates all memory for slab SL2, and resizes slab SL3 to have size SZ3.

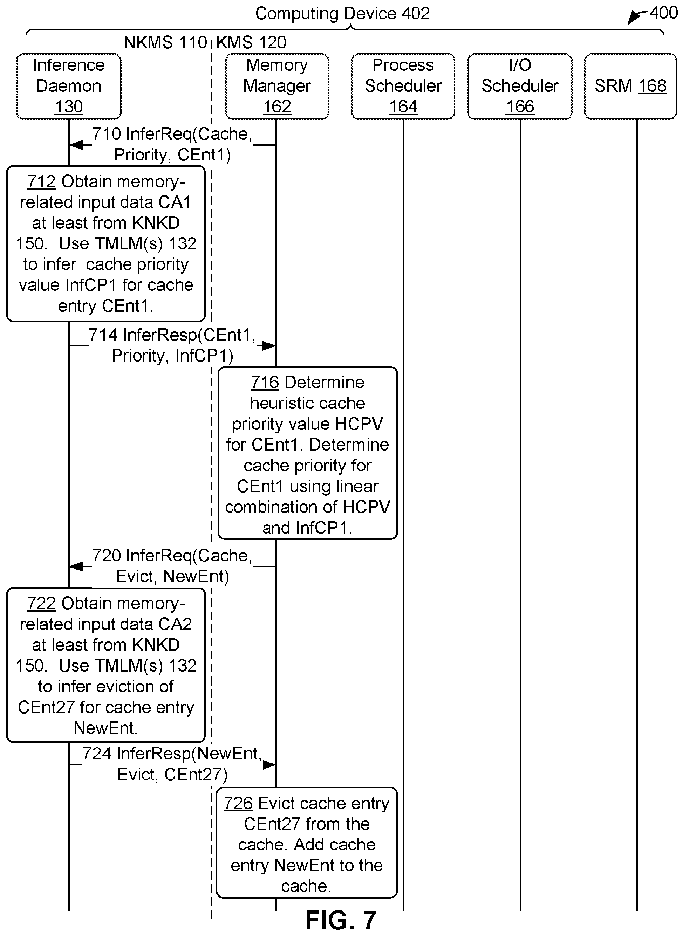

As shown in FIG. 7, scenario 400 proceeds with memory manager 162 sending inference request 710 to inference daemon 130 requesting an inference related to a cache priority for cache entry CEnt1. In scenario 400, cache entry CEnt1 has already been stored in a cache by memory manager 162 and memory manager 162 is sending inference request 710 to determine an inferred cache priority value. A cache priority value of cache entry CEnt1 can be used by memory manager 162 to determine whether or not to eject cache entry CEnt1 from the cache if cache space is needed for one or more new cache entries. After receiving inference request 710, block 712 indicates that inference daemon 130 and trained machine learning model(s) 132 obtain CA1, which includes at least memory-related input data for computing device 402, at least from kernel and non-kernel accessible files / data 150. Trained machine learning model(s) 132 then use CA1 as input data to infer a cache priority value of InfCP1 for cache entry CEnt1, as also indicated at block 712. For example, trained machine learning model(s) 132 can use priority data about cache entry CEnt1 and/or access time data in CA1 that indicates when cache entry CEnt1 was most recently accessed in determining cache priority value of InfCP1. Inference daemon 130 then sends inference response 714 to memory manager 162 providing the requested inference regarding cache entry CEnt1.

As indicated by block 716, memory manager 162 determines heuristic cache priority value HCPV for cache entry CEnt1 using one or more heuristics and determines a cache priority for cache entry CEnt1 using a fifth linear combination of inferred cache priority value InfCP1 and heuristic cache priority value HCPV; e.g., using a linear combination technique based on Equation (1) and/or Equation (2).

Memory manager 162 later receives a new cache entry NewEnt to be added to the cache, and sends inference request 720 to inference daemon 130 requesting an inference for a cache entry to be evicted to make space in the cache for the new cache entry NewEnt.

After receiving inference request 720, block 722 indicates that inference daemon 130 and trained machine learning model(s) 132 obtain memory usage and cache data CA2, which includes at least memory-related input data for computing device 402, at least from kernel and non-kernel accessible files / data 150. Trained machine learning model(s) 132 then use CA2 as input data to infer that cache entry CEnt27 should be evicted to make space in the cache for cache entry NewEnt, as also indicated at block 722. Inference daemon 130 then sends inference response 724 to memory manager 162 providing the requested inference regarding cache entries NewEnt and CEnt27. After receiving inference response 724, block 726 indicates that memory manager 162 evicts cache entry CEnt27 from the cache and then cache entry NewEnt to the cache.

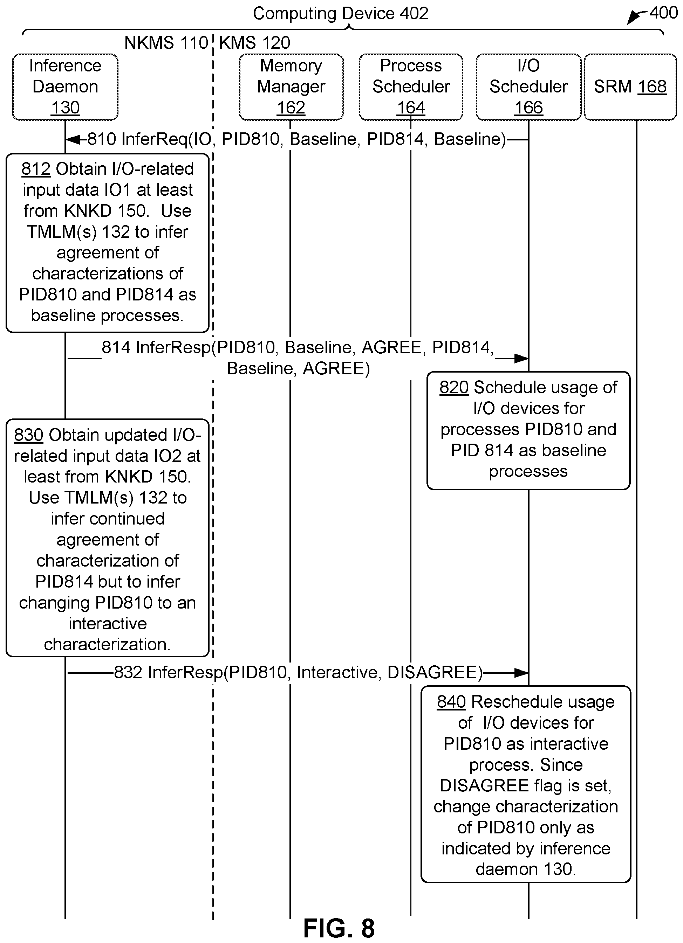

As illustrated in FIG. 8, scenario 400 proceeds with input/output scheduler 166 sending inference request 810 to inference daemon 130 requesting an inference for input/output characterizations of processes PID810 and PID814, where inference request 810 indicates that input/output scheduler 166 has already characterized both processes as baseline processes. After receiving inference request 810, inference daemon 130 and trained machine learning model(s) 132 obtain IO1, which includes at least input-output-related input data for computing device 402, at least from kernel and non-kernel accessible files / data 150, as indicated at block 812. Trained machine learning model(s) 132 then use IO1 as input data to infer agreement with input/output scheduler 166 regarding the baseline characterization for both processes PID810 and PID814, as also indicated at block 812. Inference daemon 130 then sends inference response 814 to input/output scheduler 166 providing the requested inference about processes PID810 and PID814. As indicated by block 820, input/output scheduler 166 schedules usage of input and/or output devices for processes PID810 and PID814 as baseline processes.

During scenario 400, input/output scheduler 166 continues to perform operations, including but not limited to: scheduling usage of one or more input and/or output devices and characterizing processes, while waiting for inferences; e.g., waiting for inferences during an interval of time between providing inference request 810 to inference daemon 130 and receiving inference response 814; that is, trained machine learning model(s) 132 determine the inference provided in inference response 814 asynchronously with operations performed by input/output scheduler 166.

Later, as indicated by block 830, inference daemon 130 and trained machine learning model(s) 132 obtain IO2, which includes at least updated input-output-related input data for computing device 402, at least from kernel and non-kernel accessible files / data 150. And, as also indicated at block 830, trained machine learning model(s) 132 then use IO2 as input data to determine a new inference that process PID810 is now characterized as an interactive process. Inference daemon 130 then sends inference response 832 to input/output scheduler 166 indicating that process PID810 is now characterized an interactive process and a disagreement indicator to indicate that trained machine learning model(s) 132 now disagree with input/output scheduler 166 about the characterization of process PID810. Block 840 of FIG. 8 indicates that, in response to inference response 832, input/output scheduler 166 re-characterizes process PID810 as an interactive process. Input/output scheduler 166 also records that, due to the disagreement indicator indicating inference daemon 130 and input/output scheduler 166 disagree, that inference daemon 130 rather than input/output scheduler 166 will now characterize process PID810.

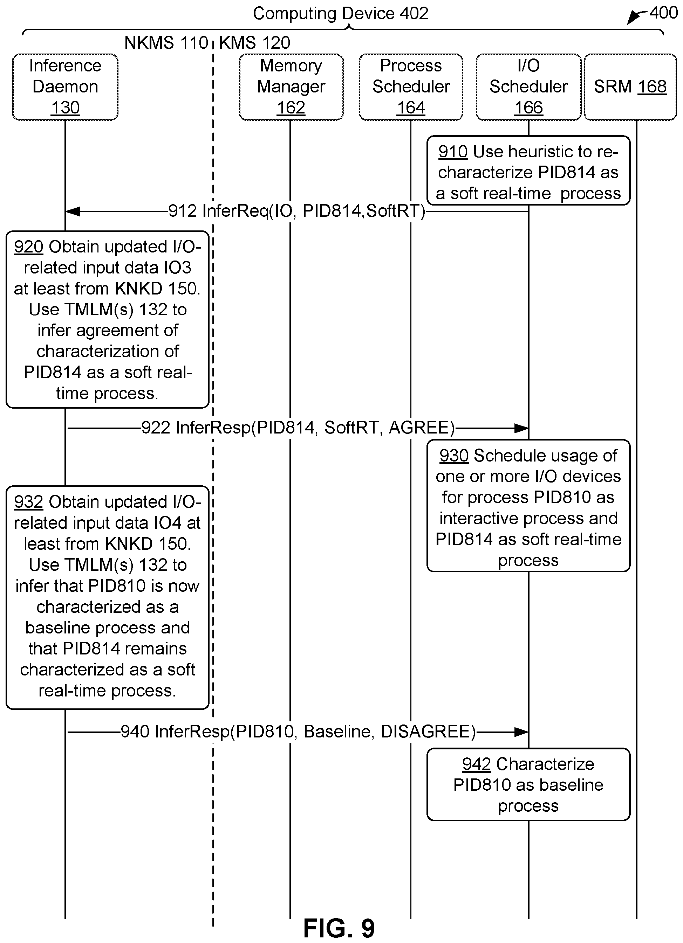

Block 910 of FIG. 9 shows that scenario 400 proceeds with input/output scheduler 166 using a heuristic to re-characterize process PID814 as a soft real-time process. Then, input/output scheduler 166 sends inference request 912 to inference daemon 130 to request an inference for input/output characterization of process PID814, with an indication that input/output scheduler 166 now characterizes process PID814 as a soft real-time process. After receiving inference request 912, block 920 indicates that inference daemon 130 and trained machine learning model(s) 132 obtain IO3, which includes at least updated input-output-related input data for computing device 402, at least from kernel and non-kernel accessible files / data 150. Trained machine learning model(s) 132 then use IO3 as input data to infer agreement with input/output scheduler 166 regarding the soft real-time process characterization for process PID814, as also indicated at block 920. Inference daemon 130 then sends inference response 922 to memory manager 162 providing the inference about process PID814. As indicated by block 930, input/output scheduler 166 receives inference response 922 and subsequently schedules usage of input and/or output devices for process PID810 as an interactive process and for process PID814 as a soft real-time process.

As indicated by block 932, inference daemon 130 and trained machine learning model(s) 132 later obtain IO4, which includes at least updated input-output-related input data for computing device 402, at least from kernel and non-kernel accessible files / data 150. And, as also indicated at block 932, trained machine learning model(s) 132 then use IO4 as input data to determine a new inference that process PID810 is now characterized as a baseline process and that process PID814 remains characterized as a soft real-time process. Inference daemon 130 then sends inference response 940 to input/output scheduler 166 indicating that process PID810 is characterized as a baseline process and a disagreement indicator to indicate that trained machine learning model(s) 132 disagree with input/output scheduler 166 about the characterization of process PID810. Block 942 indicates that, in response to inference response 940, input/output scheduler 166 re-characterizes process PID810 as a baseline process.

In other scenarios, input/output scheduler 166, process PID810, and/or process PID814 can generate an output of computing device 402, where the output can be a visual output, an audio output, a haptic output, or a combination thereof. For example, process PID814 can be process executing a messaging application, and can request input/output scheduler 166 to schedule retrieval of data from a block storage device for a message, where the block storage device is acting as an input device from process PID814's point of view. Then, after process scheduler 164 schedules execution of process PID814 to use the block storage device, then process PID814 can use the data for the message retrieved from the block storage device to generate one or more outputs of computing device 402; *e.g.,* a display of the message, an alerting tone or other sound related to the message, a vibration upon message arrival, etc.

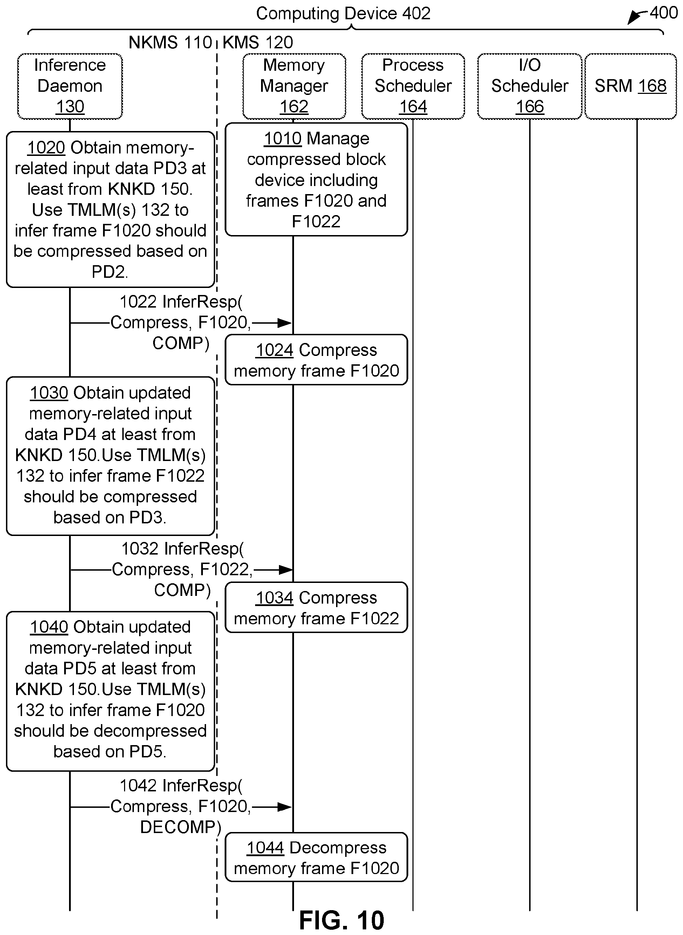

Block 1010 of FIG. 10 indicates that scenario 400 continues with memory manager 162 managing a compressed block device that includes memory frames F1020 and F1022. Block 1020 indicates that inference daemon 130 and trained machine learning model(s) 132 obtain PD3, which includes at least memory-related input data of computing device 402, at least from kernel and non-kernel accessible files / data 150. Then, trained machine learning model(s) 132 use PD3 as input data that leads to an inference that memory frame F1020 should be compressed. Inference daemon 130 then sends inference response 1022 to memory manager 162 that includes the inference that memory frame F1020 should be compressed. After receiving inference response 1022, block 1024 of FIG. 10 indicates that memory manager 162 compresses memory frame F1020 as part of managing the compressed block device.

As indicated by block 1030, inference daemon 130 and trained machine learning model(s) 132 later obtain PD4, which includes at least updated memory-related input data of computing device 402, at least from kernel and non-kernel accessible files / data 150. Then, trained machine learning model(s) 132 use PD4 as input data that leads to an inference that memory frame F1022 should be compressed. Inference daemon 130 then sends inference response 1032 to memory manager 162 that includes the inference that memory frame F1022 should be compressed. After receiving inference response 1032, block 1034 indicates that memory manager 162 compresses memory frame F1022 as part of managing the compressed block device.

As indicated by block 1040, inference daemon 130 and trained machine learning model(s) 132 later obtain PD5, which includes at least updated memory-related input data of computing device 402, at least from kernel and non-kernel accessible files / data 150. Then, trained machine learning model(s) 132 use PD5 as input data that leads to an inference that memory frame F1020 should be decompressed. Inference daemon 130 then sends inference response 1042 to memory manager 162 that includes the inference that memory frame F1020 should be decompressed. After receiving inference response 1042, block 1044 indicates that memory manager 162 decompresses memory frame F1020 as part of managing the compressed block device.

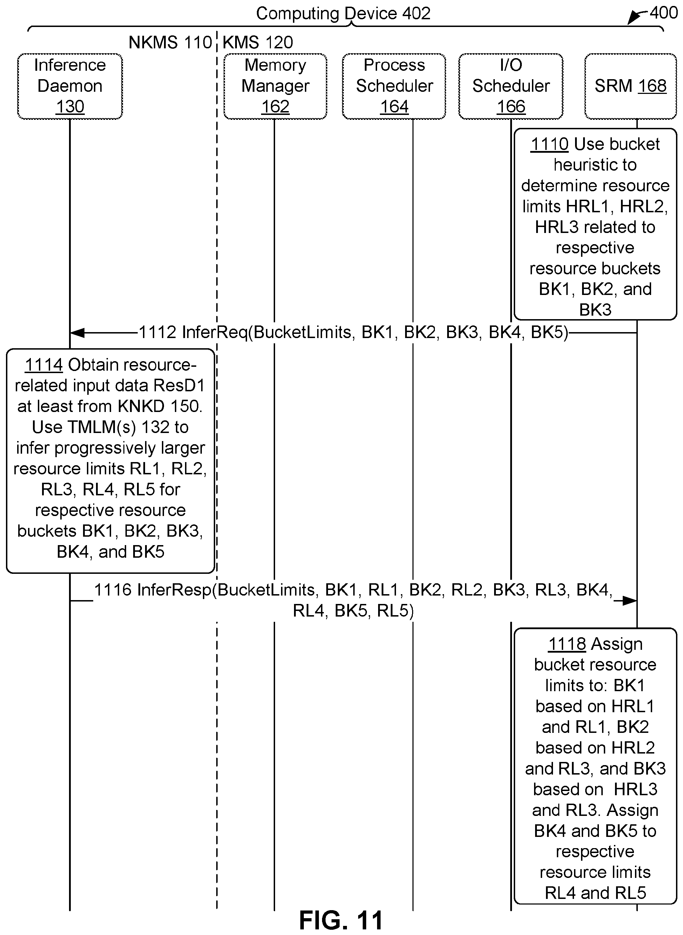

Block 1110 of FIG. 11 indicates that scenario 400 proceeds with system resource manager 168 using a bucket heuristic to determine resource limits HRL1, HRL2, HRL3 for three respective resource buckets BK1, BK2, BK3. In scenario 400, resource buckets BK1, BK2, BK3 are three resource buckets out of five total resource buckets BK1, BK2, BK3, BK4, and BK5. System resource manager 168 then sends inference request 1112 to inference daemon 130 to request an inference related to resource bucket limits for all five resource buckets.

After receiving inference request 1112, block 1114 indicates that inference daemon 130 and trained machine learning model(s) 132 obtain ResD1, which includes at least resource-related input data of computing device 402, at least from kernel and non-kernel accessible files / data 150. Trained machine learning model(s) 132 then use ResD1 as input data to infer resource limits RL1, RL2, RL3, RL4, RL5 for respective resource buckets BK1, BK2, BK3, BK4, and BK5. Inference daemon 130 then sends inference response 1116 to system resource manager 168 providing the inference about the five resource buckets of scenario 400. As indicated by block 1118, system resource manager 168 receives inference response 1116, assigns resource limits to resource buckets RL1, RL2, and RL3 based on combinations of respective heuristic resource limits HRL1, HRL2, HRL3 and inferred resource limits RL1, RL2, RL3, and assigns resource limits of RL4, RL5 to respective resource buckets BK4, BK5.

During scenario 400, system resource manager 168 continues to perform operations, including but not limited to: determining resource limits for resource buckets and assigning resource buckets to processes, while waiting for inferences; e.g., waiting for inferences during an interval of time between providing inference request 1112 to inference daemon 130 and receiving inference response 1116; that is, trained machine learning model(s) 132 determine the inference provided in inference response 1116 asynchronously with operations performed by system resource manager 168.

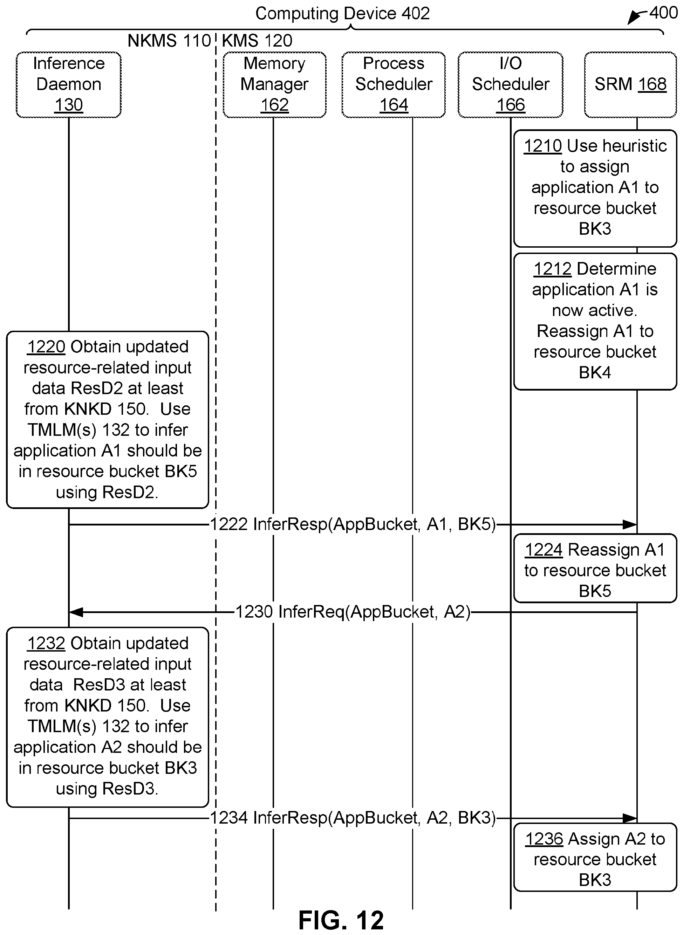

Block 1210 of FIG. 12 indicates that scenario 400 proceeds with system resource manager 168 using a heuristic to initially assign a process executing an application A1 to resource bucket BK3. As indicated by block 1212, the process executing application A1 later becomes active and system resource manager 168 using the heuristic to reassign that process to resource bucket BK4.

Block 1220 indicates that inference daemon 130 and trained machine learning model(s) 132 obtain ResD2, which includes at least updated resource-related input data of computing device 402, at least from kernel and non-kernel accessible files / data 150. Trained machine learning model(s) 132 then use ResD2 as input data to infer that the process executing application A1 should be assigned to resource bucket BK5. Inference daemon 130 then sends inference response 1222 to system resource manager 168 providing the inference about the process executing application A1. As indicated by block 1224, system resource manager 168 receives inference response 1222 and assigns the process executing application A1 to resource bucket BK5.

System resource manager 168 then sends inference request 1230 to inference daemon 130 to request an inference related to resource bucket limits for a process executing application A2. After receiving inference request 1230, block 1232 indicates that inference daemon 130 and trained machine learning model(s) 132 obtain ResD3, which includes at least updated resource-related input data of computing device 402, at least from kernel and non-kernel accessible files / data 150. Trained machine learning model(s) 132 then use ResD3 as input data to infer that the process executing application A2 should be assigned to resource bucket BK3. As indicated by block 1236, system resource manager 168 receives inference response 1234 and assigns the process executing application A2 to resource bucket BK3.

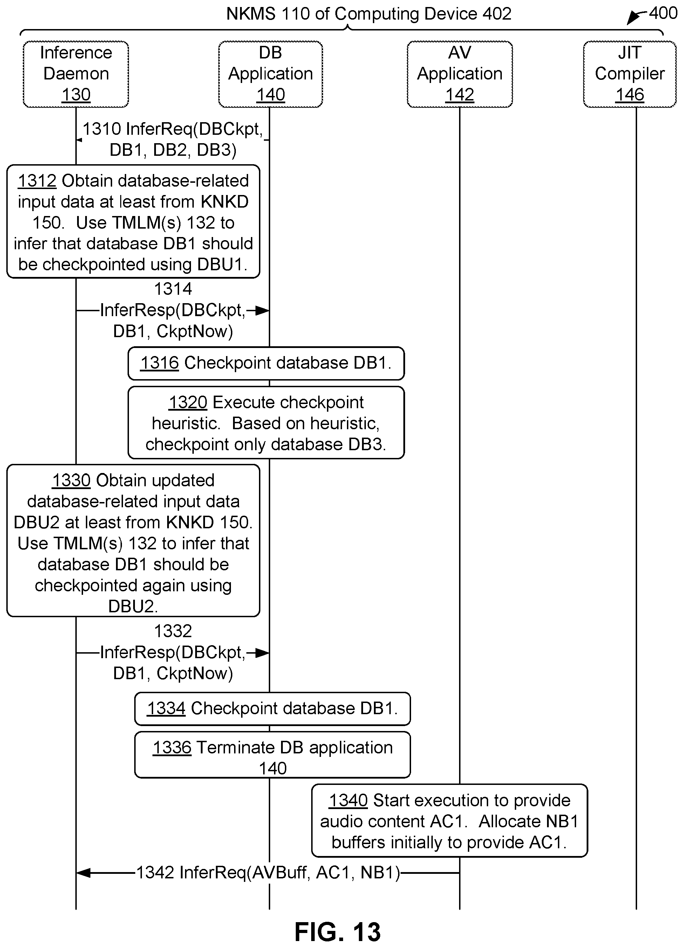

FIG. 13 indicates scenario 400 proceeds with database application 140 sending inference request 1310 to inference daemon 130 requesting an inference related to checkpointing databases DB1, DB2, and DB3. After receiving inference request 1310, block 1312 indicates that inference daemon 130 and trained machine learning model(s) 132 obtain DBU1, which includes at least database-related input data of computing device 402, at least from kernel and non-kernel accessible files / data 150. Trained machine learning model(s) 132 then use DBU1 as input data to infer that database DB1 should be checkpointed and that databases DB2 and DB3 should not be checkpointed and sends corresponding inference response 1314 to database application 140. After receiving inference response 1314, block 1316 of FIG. 13 indicates that database application 140 checkpoints database DB1. Block 1320 indicates that database application 140 later executes a checkpoint heuristic and checkpoints database DB3.

During scenario 400, database application 140 continues to perform operations, including but not limited to: carrying out database transactions, receiving database queries, responding to database queries, logging database transactions, and checkpointing databases, while waiting for inferences; e.g., waiting for inferences during an interval of time between providing inference request 1310 to inference daemon 130 and receiving inference response 1314; that is, trained machine learning model(s) 132 determine the inference provided in inference response 1314 asynchronously with operations performed by database application 140.

As indicated by block 1330, scenario 400 continues with inference daemon 130 and trained machine learning model(s) 132 obtain DBU2, which includes at least updated database-related input data of computing device 402, at least from kernel and non-kernel accessible files / data 150. Trained machine learning model(s) 132 then use DBU2 as input data to infer that database DB1 should be checkpointed again and sends corresponding inference response 1332 to database application 140. After receiving inference response 1332, block 1334 indicates that database application 140 checkpoints database DB1 again. And, block 1336 indicates that database application 140 subsequently terminates execution.

Scenario 400 continues, as indicated by block 1340, with audio/video application 142 starting execution and initially allocating NB1 buffers to provide audio content AC1, where the value of NB1 is determined using a heuristic of audio/video application 142. In scenario 400, audio/video application 142 provides audio content AC1 along with a corresponding visual display as outputs of computing device 402.

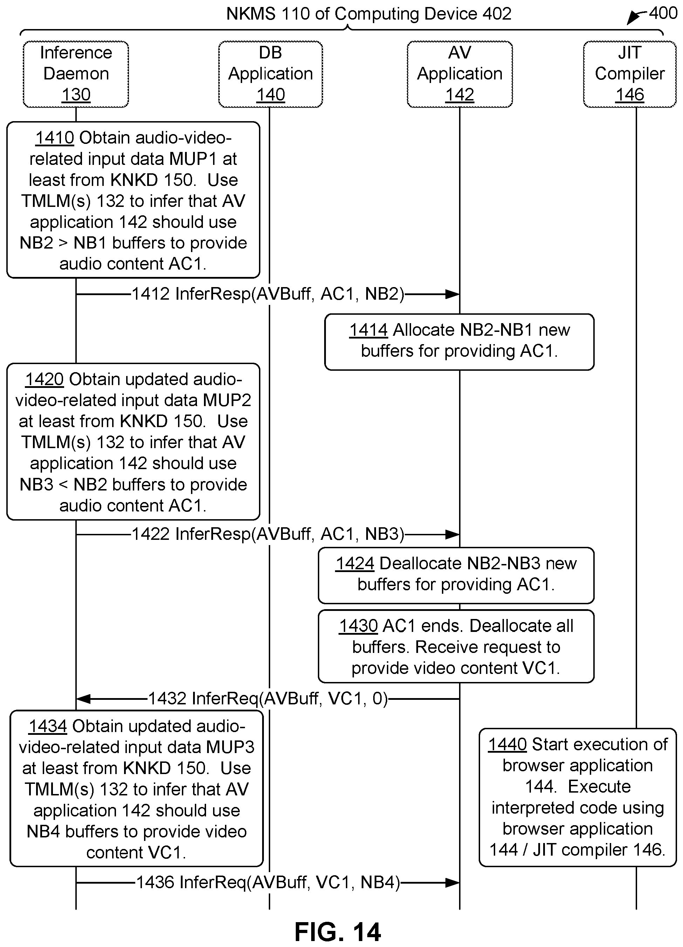

Audio/video application 142 then sends inference request 1342 to inference daemon 130 requesting an inference about a number of buffers to allocate to provide audio content AC1 with information that NB1 buffers have already been allocated. After receiving inference request 1342, block 1410 of FIG. 14 indicates that inference daemon 130 and trained machine learning model(s) 132 obtain MUP1, which includes at least audio-video-related input data of computing device 402, at least from kernel and non-kernel accessible files / data 150. Trained machine learning model(s) 132 then use MUP1 as input data to infer that audio/video application 142 should use NB2 buffers to provide audio content AC1. Inference daemon 130 then sends inference response 1412 to audio/video application 142, providing the inference about the number of buffers to allocate to provide audio content AC1. In scenario 400, NB2 is greater than NB1. Block 1414 indicates that, after receiving inference response 1412, audio/video application 142 allocates NB2 - NB1 more buffers for providing audio content AC1.

In other scenarios, audio/video application 142 can determine a number of buffers NB_COMB for providing audio content AC1 as a combination of the heuristically-determined value NB1 and the model-determined inferred value NB2. For example, audio/video application 142 can use a sixth linear combination of heuristically-determined value NB1 and the model-determined inferred value NB2; *e.g.,* using a linear combination technique based on Equation (1) and/or Equation (2).

During scenario 400, audio/video application 142 continues to perform operations, including but not limited to: providing audio and/or video content, allocating buffers, and deallocating buffers, while waiting for inferences; e.g., waiting for inferences during an interval of time between providing inference request 1342 to inference daemon 130 and receiving inference response 1412; that is, trained machine learning model(s) 132 determine the inference provided in inference response 1412 asynchronously with operations performed by audio/video application 142.

Block 1420 indicates that inference daemon 130 and trained machine learning model(s) 132 later obtain MUP2, which includes at least updated audio-video-related input data of computing device 402, at least from kernel and non-kernel accessible files / data 150. Trained machine learning model(s) 132 then use MUP2 as input data to infer that audio/video application 142 should use NB3 buffers to provide audio content AC1. Inference daemon 130 then sends inference response 1422 to audio/video application 142, providing the inference about the number of buffers to allocate to provide audio content AC1. In scenario 400, NB3 is less than NB2. Block 1424 indicates that, after receiving inference response 1422, audio/video application 142 deallocates NB2 - NB3 buffers for providing audio content AC1.

Block 1430 indicates that presentation of audio content AC1 ends and audio/video application 142 deallocates all buffers. Block 1430 also indicates that audio/video application 142 receives a request to provide video content VC1. Audio/video application 142 then sends inference request 1432 to inference daemon 130 requesting an inference about a number of buffers to allocate to provide video content VC1 with information that zero buffers have already been allocated.

After receiving inference request 1432, block 1434 indicates that inference daemon 130 and trained machine learning model(s) 132 obtain MUP3, which includes at least updated audio-video-related input data of computing device 402, at least from kernel and non-kernel accessible files / data 150. Trained machine learning model(s) 132 then use MUP3 as input data to infer that audio/video application 142 should use NB4 buffers to provide video content VC1. Inference daemon 130 then sends inference response 1436 to audio/video application 142, providing the inference about the number of buffers to allocate to provide video content VC 1.

As indicated by block 1440, scenario 400 also involves browser application 144 starting execution and both browser application 144 and just-in-time compiler 146 interpreting programming language instructions during execution.

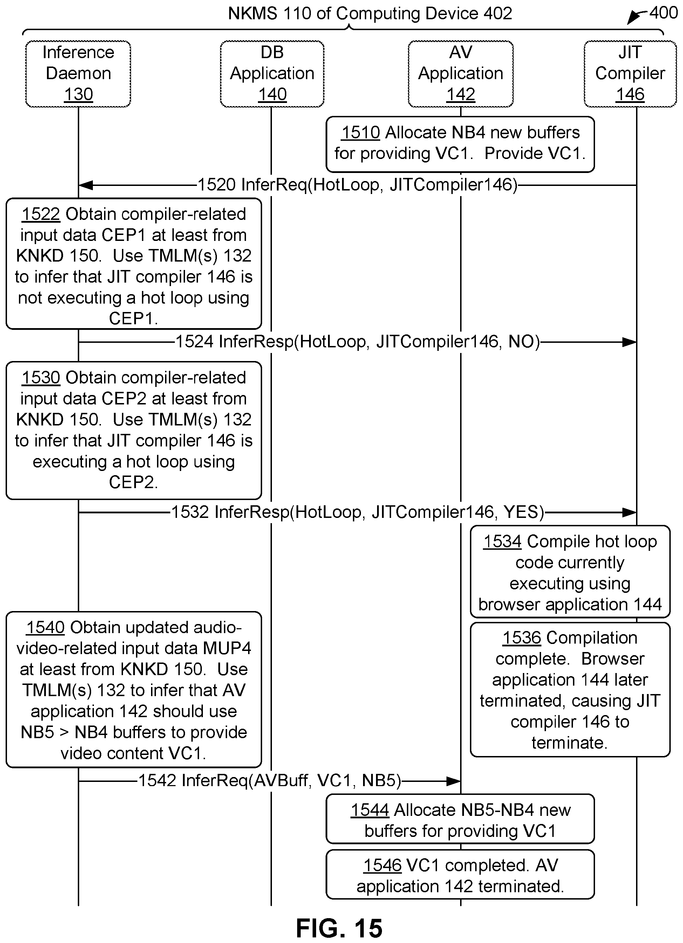

Turning to FIG. 15, block 1510 indicates that, after receiving inference response 1436, audio/video application 142 allocates NB4 buffers to provide video content VC1 and begins to provide video content VC1. In scenario 400, audio/video application 142 provides video content VC1 as audio and visual outputs of computing device 402.

Scenario 400 continues with just-in-time compiler 146 of browser application 144 sending inference request 1520 to inference daemon 130 requesting an inference about whether instructions currently being executed by just-in-time compiler 146 should be designated as a hot loop. Block 1522 indicates that inference daemon 130 and trained machine learning model(s) 132 obtain CEP1, which includes at least compiler-related input data of computing device 402, at least from kernel and non-kernel accessible files / data 150. Trained machine learning model(s) 132 then use CEP1 as input data to infer the instructions currently being executed by just-in-time compiler 146 should not be designated as a hot loop. Inference daemon 130 then sends inference response 1524 to just-in-time compiler 146 to provide the inference about the hot loop non-designation.

During scenario 400, with just-in-time compiler 146 continues to perform operations, including but not limited to: compiling instructions and determining hot loops in the instructions, while waiting for inferences; e.g., waiting for inferences during an interval of time between sending inference request 1520 to inference daemon 130 and receiving inference response 1524; that is, trained machine learning model(s) 132 determine the inference provided in inference response 1524 asynchronously with operations performed by just-in-time compiler 146.

Block 1530 indicates that scenario 400 proceeds with inference daemon 130 and trained machine learning model(s) 132 obtaining CEP2, which includes at least updated compiler-related input data of computing device 402, at least from kernel and non-kernel accessible files / data 150. Trained machine learning model(s) 132 then use CEP2 as input data to infer the instructions currently being executed by just-in-time compiler 146 should be designated as a hot loop. Inference daemon 130 then sends inference response 1532 to just-in-time compiler 146, providing the inference about the hot loop designation. After receiving inference response 1532, block 1534 indicates that just-in-time compiler 146 designates the instructions currently being executed as a hot loop and compiles the instructions now designated as a hot loop. Block 1536 indicates that just-in-time compiler 146 completes the compilation of the instructions now designated as a hot loop After the compiled hot loop instructions are executed, browser application 144 (which includes just-in-time compiler 146) is terminated, causing just-in-time compiler 146 to terminate as well, as further indicated by block 1536.

As indicated by block 1540, scenario 400 continues with inference daemon 130 and trained machine learning model(s) 132 obtain MUP4, which includes updated audio-video-related input data of computing device 402, at least from kernel and non-kernel accessible files / data 150. Trained machine learning model(s) 132 then use MUP4 as input data to infer that audio/video application 142 should use NB5 buffers to provide video content VC1. Inference daemon 130 then sends inference response 1542 to audio/video application 142, providing the inference about the number of buffers to allocate to provide video content VC1. In scenario 400, NB5 is larger than NB4 (the number of buffers currently allocated by audio/video application 142). Block 1544 indicates that, after receiving inference response 1542, audio/video application 142 allocates NB5 - NB4 more buffers for providing video content VC1. Then, block 1546 indicates that presentation of video content VC1 ends and audio/video application 142 is terminated. Once audio/video application 142 completes termination, scenario 400 can be completed.

### Example Data Network

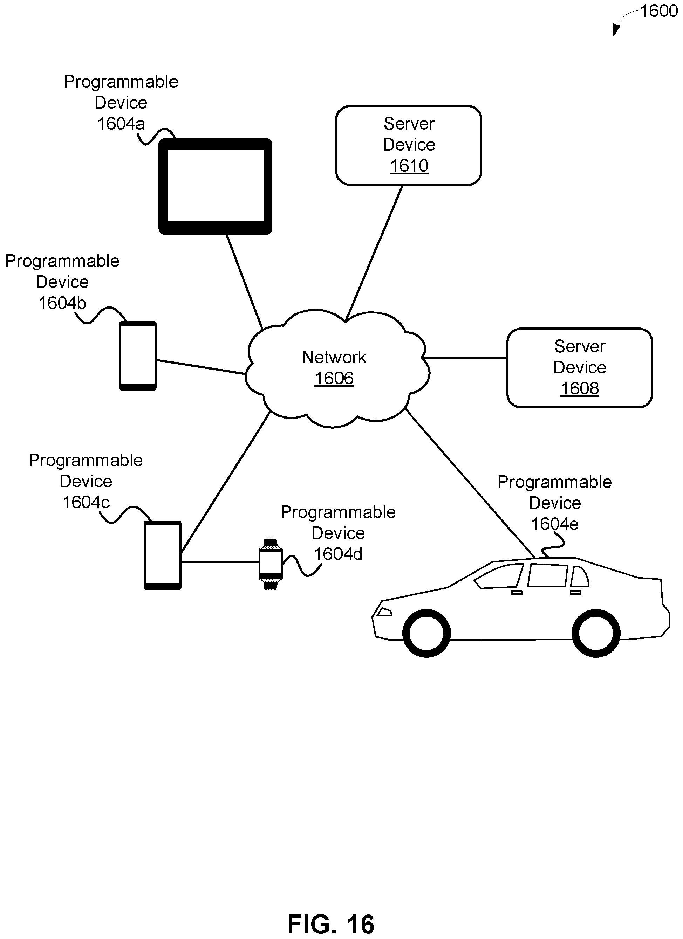

FIG. 16 depicts distributed computing architecture 1600, in accordance with example embodiments. Distributed computing architecture 1600 includes server devices 1608, 1610 that are configured to communicate, via network 1606, with programmable devices 1604a, 1604b, 1604c, 1604d, 1604e. Network 1606 may correspond to a local area network (LAN), a wide area network (WAN), a WLAN, a WWAN, a corporate intranet, the public Internet, or any other type of network configured to provide a communications path between networked computing devices. Network 1606 may also correspond to a combination of one or more LANs, WANs, corporate intranets, and/or the public Internet.

Although FIG. 16 only shows five programmable devices, distributed application architectures may serve tens, hundreds, or thousands of programmable devices. Moreover, programmable devices 1604a, 1604b, 1604c, 1604d, 1604e (or any additional programmable devices) may be any sort of computing device, such as an ordinary laptop computer, desktop computer, wearable computing device, mobile computing device, head-mountable device (HMD), network terminal, wireless communication device *(e.g.,* a smart phone or cell phone), and so on. In some examples, such as illustrated by programmable devices 1604a, 1604b, 1604c, 1604e, programmable devices can be directly connected to network 1606. In other examples, such as illustrated by programmable device 1604d, programmable devices can be indirectly connected to network 1606 via an associated computing device, such as programmable device 1604c. In this example, programmable device 1604c can act as an associated computing device to pass electronic communications between programmable device 1604d and network 1606. In other examples, such as illustrated by programmable device 1604e, a computing device can be part of and/or inside a vehicle, such as a car, a truck, a bus, a boat or ship, an airplane, etc. In other examples not shown in FIG. 16, a programmable device can be both directly and indirectly connected to network 1606.

Server devices 1608, 1610 can be configured to perform one or more services, as requested by programmable devices 1604a-1604e. For example, server device 1608 and/or 1610 can provide content to programmable devices 1604a-1604e. The content can include, but is not limited to, web pages, hypertext, scripts, binary data such as compiled software, images, audio, and/or video. The content can include compressed and/or uncompressed content. The content can be encrypted and/or unencrypted. Other types of content are possible as well.

As another example, server device 1608 and/or 1610 can provide programmable devices 1604a-1604e with access to software for database, search, computation, graphical, audio, video, World Wide Web/Internet utilization, and/or other functions. Many other examples of server devices are possible as well.

### Computing Device Architecture

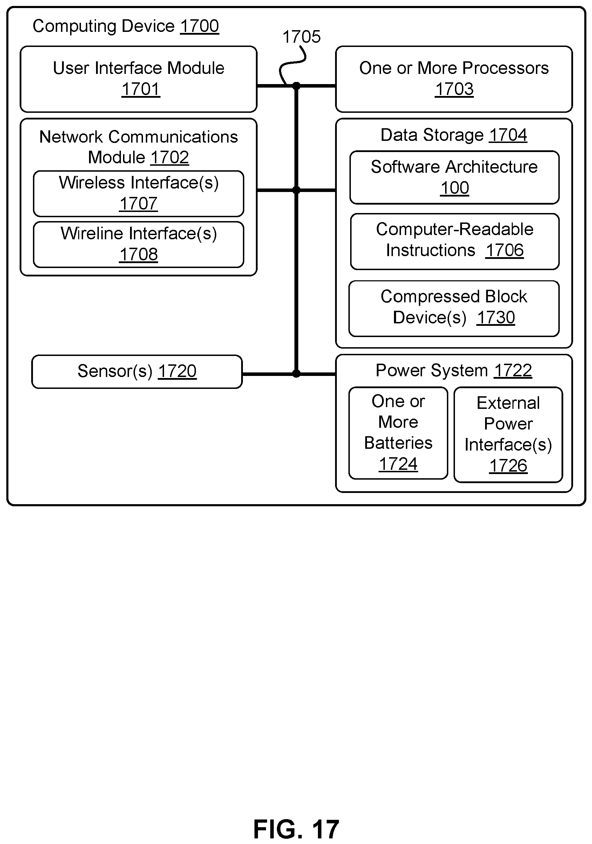

FIG. 17 is a functional block diagram of an example computing device 1700, in accordance with example embodiments. In particular, computing device 1700 shown in FIG. 17 can be configured to perform at least one function of a machine learning algorithm, a machine learning model, a computing device, an operating system, a kernel, a kernel component, a software application, a non-kernel component, software architecture 100, non-kernel memory space 110, kernel memory space 120, inference daemon 130, trained machine learning model(s) 132, database application 140, audio/video application 142, browser application 144, just-in-time compiler 146, kernel and non-kernel accessible files / data 150, operating system kernel 160, memory manager 162, process scheduler 164, input/output scheduler 166, system resource manager 168, and/or at least one function related to an inference, input data, training phase 202, inference phase 204, inference requests 240, inference(s) 250, feedback 260, table 300, scenario 400, computing device 402, and/or method 1800.

Computing device 1700 may include a user interface module 1701, a network communications module 1702, one or more processors 1703, data storage 1704, one or more sensors 1720, and power system 1722, all of which may be linked together via a system bus, network, or other connection mechanism 1705.

User interface module 1701 can be operable to send data to and/or receive data from external user input/output devices. For example, user interface module 1701 can be configured to send and/or receive data to and/or from user input devices such as a touch screen, a computer mouse, a keyboard, a keypad, a touch pad, a track ball, a joystick, a camera, a voice recognition module, and/or other similar devices. User interface module 1701 can also be configured to provide output to user display devices, such as one or more cathode ray tubes (CRT), liquid crystal displays, light emitting diodes (LEDs), displays using digital light processing (DLP) technology, printers, light bulbs, and/or other similar devices, either now known or later developed. User interface module 1701 can also be configured to generate audible outputs, with devices such as a speaker, speaker jack, audio output port, audio output device, earphones, and/or other similar devices. User interface module 1701 can further be configured with one or more haptic devices that can generate haptic outputs, such as vibrations and/or other outputs detectable by touch and/or physical contact with computing device 1700. In some examples, user interface module 1701 can be used to provide a graphical user interface (GUI) for utilizing computing device 1700.

Network communications module 1702 can include one or more devices that provide one or more wireless interfaces 1707 and/or one or more wireline interfaces 1708 that are configurable to communicate via a network. Wireless interface(s) 1707 can include one or more wireless transmitters, receivers, and/or transceivers, such as a Bluetooth^{™} transceiver, a Zigbee^{®} transceiver, a Wi-Fi^{™} transceiver, a WiMAX^{™} transceiver, and/or other similar type of wireless transceiver configurable to communicate via a wireless network. Wireline interface(s) 1708 can include one or more wireline transmitters, receivers, and/or transceivers, such as an Ethernet transceiver, a Universal Serial Bus (USB) transceiver, or similar transceiver configurable to communicate via a twisted pair wire, a coaxial cable, a fiber-optic link, or a similar physical connection to a wireline network.

In some examples, network communications module 1702 can be configured to provide reliable, secured, and/or authenticated communications. For each communication described herein, information for ensuring reliable communications (e.g., guaranteed message delivery) can be provided, perhaps as part of a message header and/or footer (e.g., packet/message sequencing information, encapsulation headers and/or footers, size/time information, and transmission verification information such as cyclic redundancy check (CRC) and/or parity check values). Communications can be made secure *(e.g.,* be encoded or encrypted) and/or decrypted/decoded using one or more cryptographic protocols and/or algorithms, such as, but not limited to, Data Encryption Standard (DES), Advanced Encryption Standard (AES), a Rivest-Shamir-Adelman (RSA) algorithm, a Diffie-Hellman algorithm, a secure sockets protocol such as Secure Sockets Layer (SSL) or Transport Layer Security (TLS), and/or Digital Signature Algorithm (DSA). Other cryptographic protocols and/or algorithms can be used as well or in addition to those listed herein to secure (and then decrypt/decode) communications.

One or more processors 1703 can include one or more general purpose processors, and/or one or more special purpose processors (e.g., digital signal processors, graphics processing units, application specific integrated circuits, etc.). One or more processors 1703 can be configured to execute computer-readable instructions 1706 that are contained in data storage 1704 and/or other instructions as described herein.

Data storage 1704 can include one or more computer-readable storage media that can be read and/or accessed by at least one of one or more processors 1703. The one or more computer-readable storage media can include volatile and/or non-volatile storage components, such as optical, magnetic, organic or other memory or disc storage, which can be integrated in whole or in part with at least one of one or more processors 1703. In some examples, data storage 1704 can be implemented using a single physical device *(e.g.,* one optical, magnetic, organic or other memory or disc storage unit), while in other examples, data storage 1704 can be implemented using two or more physical devices.

Data storage 1704 can include computer-readable instructions 1706 and perhaps additional data. In some examples, data storage 1704 can include storage required to perform at least part of the herein-described methods, scenarios, and techniques and/or at least part of the functionality of the herein-described devices and networks. In some examples, data storage 1704 can include storage to provide at least part of the functionality of software architecture 100. In some examples, data storage 1704 can additionally include storage to provide one or more compressed block devices 1730.

In some examples, computing device 1700 can include one or more sensors 1720. Sensors 1720 can be configured to measure conditions within computing device 1700 and/or conditions in an environment of computing device 1700 and provide data about these conditions. For example, sensors 1720 can include one or more of: (i) sensors for obtaining data about computing device 1700, such as, but not limited to, a thermometer measuring computing device 1700's temperature, a battery sensor for measuring power of one or more batteries of power system 1722, and/or other sensors measuring conditions of computing device 1700; (ii) an identification sensor to identify other objects and/or devices, such as, but not limited to, a Radio Frequency Identification (RFID) reader, proximity sensor, one-dimensional barcode reader, two-dimensional barcode (e.g., Quick Response (QR) code) reader, and a laser tracker, where the identification sensors can be configured to read identifiers, such as RFID tags, barcodes, QR codes, and/or other devices and/or object configured to be read and provide at least identifying information; (iii) sensors to measure locations and/or movements of computing device 1700, such as, but not limited to, a tilt sensor, a gyroscope, an accelerometer, a Doppler sensor, a GPS device, a sonar sensor, a radar device, a laser-displacement sensor, and a compass; (iv) an environmental sensor to obtain data indicative of an environment of computing device 1700 , such as, but not limited to, an infrared sensor, an optical sensor, a light sensor, a camera, a biosensor, a capacitive sensor, a touch sensor, a temperature sensor, a wireless sensor, a radio sensor, a movement sensor, a microphone, a sound sensor, an ultrasound sensor and/or a smoke sensor; and/or (v) a force sensor to measure one or more forces (e.g., inertial forces and/or G-forces) acting about computing device 1700, such as, but not limited to one or more sensors that measure: forces in one or more dimensions, torque, ground force, friction, and/or a zero moment point (ZMP) sensor that identifies ZMPs and/or locations of the ZMPs. Many other examples of sensors 1720 are possible as well.

Power system 1722 can include one or more batteries 1724 and/or one or more external power interfaces 1726 for providing electrical power to computing device 1700. Each battery of the one or more batteries 1724 can, when electrically coupled to the computing device 1700, act as a source of stored electrical power for computing device 1700. One or more batteries 1724 of power system 1722 can be configured to be portable; e.g., readily transportable by a person carrying computing device 1700 with the one or more batteries. Some or all of one or more batteries 1724 can be readily removable from computing device 1700. In other examples, some or all of one or more batteries 1724 can be internal to computing device 1700, and so may not be readily removable from computing device 1700. Some or all of one or more batteries 1724 can be rechargeable; for example, a rechargeable battery can be recharged via a wired connection between the battery and another power supply; *e.g.,* one or more power supplies that are external to computing device 1700 that are connected to computing device 1700 via the one or more external power interfaces. In other examples, some or all of one or more batteries 1724 can be non-rechargeable batteries.

One or more external power interfaces 1726 of power system 1722 can include one or more wired-power interfaces, such as a USB cable and/or a power cord, that enable wired electrical power connections to one or more power supplies that are external to computing device 1700. One or more external power interfaces 1726 can include one or more wireless power interfaces, such as a Qi wireless charger, that enable wireless electrical power connections, such as via a Qi wireless charger, to one or more external power supplies. Once an electrical power connection is established to an external power source using one or more external power interfaces 1726, computing device 1700 can draw electrical power from the external power source the established electrical power connection. In some examples, power system 1722 can include related sensors; e.g., battery sensors associated with the one or more batteries, electrical power sensors.

### Example Methods of Operation

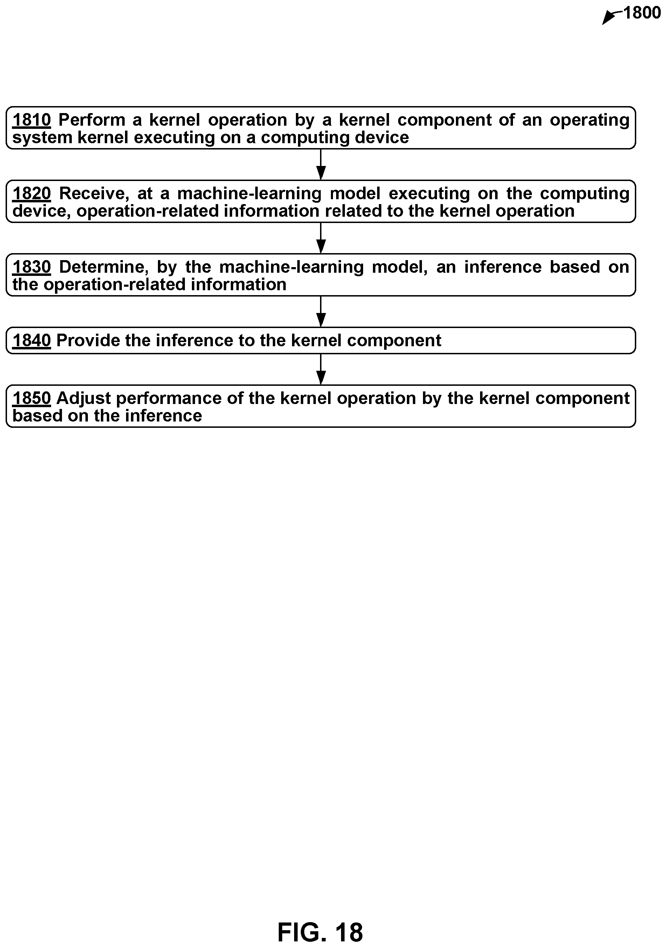

FIG. 18 is a flowchart of method 1800, in accordance with some example embodiments. Method 1800 can be executed by a computing device, such as computing device 1700. Method 1800 can begin at block 1810, where a kernel component of an operating system kernel executing on the computing device performs a kernel operation, such as discussed herein at least in the context of FIGS. 1 and 3-12. In some examples, performing the kernel operation by the kernel component can include determining a component-determined value using a heuristic of the kernel component; and where determining the inference based on the operation-related information includes determining a model-determined value based on the operation-related information, such as discussed herein at least in the context of FIGS. 1 and 3-12.

At block 1820, a machine-learning model executing on the computing device receives operation-related information related to the kernel operation, such as discussed herein at least in the context of FIGS. 1-12. In some examples, receiving, at the machine-learning model, the operation-related information can include: receiving, at the machine-learning model, successive batches of operation-related information at intervals corresponding to a set time quantum, such as discussed herein at least in the context of FIG. 2. In some of these examples, the set time quantum can be between approximately one hundred milliseconds and ten seconds, such as discussed herein at least in the context of FIG. 2. In other examples, receiving the operation-related information can include: receiving, at the machine-learning model, the operation-related information using a first file that is accessible from the non-kernel memory space and from the kernel memory space, such as discussed herein at least in the context of FIGS. 1 and 4-15. In other examples, receiving the operation-related information can include receiving, at the machine-learning model, the operation-related information using a first kernel object that is accessible from the non-kernel memory space and from the kernel memory space, such as discussed herein at least in the context of FIG. 1. In other examples, providing the inference to the kernel component can include providing the inference to the kernel component using a second kernel object that is accessible from the non-kernel memory space and from the kernel memory space, such as discussed herein at least in the context of FIG. 1.

In other examples, receiving the operation-related information can include receiving priority information related to a plurality of priorities associated with the plurality of computer processes, such as discussed herein at least in the context of FIGS. 1 and 3-5. In other examples, receiving the process information can include receiving time-slice information related to a plurality of time-slice values associated with the plurality of computer processes, such as discussed herein at least in the context of FIGS. 1 and 3-5. In other examples, receiving the operation-related information can include receiving cache priority information related to a plurality of priorities associated with the plurality of cache entries and a plurality of access times associated with the plurality of cache entries, and where a first access time of the plurality of access times is associated with a first cache entry of the plurality of cache entries and indicates when the first cache entry was most recently accessed, such as discussed herein at least in the context of FIGS. 1, 3, 6, and 7.

At block 1830, the machine-learning model determines an inference based on the operation-related information, such as discussed herein at least in the context of FIGS. 1-12. In some examples, determining, by the machine-learning model, the inference based on the operation-related information can include: determining, by the machine-learning model, successive inferences at intervals corresponding to the set time quantum based on a most recently received batch of operation-related information, such as discussed herein at least in the context of FIG. 2. In other examples, determining, by the machine-learning model, the inference based on the operation-related information occurs asynchronously with scheduling execution of the plurality of computer processes by the process scheduler, such as discussed herein at least in the context of FIGS. 1 and 3-5.

In other examples, determining the inference based on the operation-related information can include determining the inference based on the time-slice information, the inference including a model-determined time-slice value associated with the plurality of computer processes, such as discussed herein at least in the context of FIGS. 1 and 3-5. In other examples, determining the inference based on the operation-related information can include determining the inference based on the cache priority information and the plurality of access times, and where the model-determined cache-management value can include a model-determined cache priority value, such as discussed herein at least in the context of FIGS. 1, 3, 6, and 7. In other examples, determining, by the machine-learning model, the inference based on the operation-related information occurs asynchronously with scheduling usage of the one or more input-output devices by the one or more processes based on the model-input-output-related characterization using the input/output manager, such as discussed herein at least in the context of FIGS. 1, 3, 8, and 9. In other examples, determining, by the machine-learning model, the inference based on the operation-related information can include the machine-learning model determining the inference based on the operation-related information asynchronously with the memory manager determining whether to compress the first memory page based on the compression indication, such as discussed herein at least in the context of FIGS. 1, 3, and 10.

In other examples, determining, by the machine-learning model, the inference based on the operation-related information occurs asynchronously with determining the resource limits related to the at least one resource bucket of the one or more resource buckets, such as discussed herein at least in the context of FIGS. 1, 3, 11, and 12. In other examples, determining, by the machine-learning model, the inference based on the operation-related information occurs asynchronously with initiating the determination of whether the first loop is a hot loop based on the hot loop indication using the compiler, such as discussed herein at least in the context of FIGS. 1, 3, 14, and 15. In other examples, the machine-learning model can include a neural network, then, determining the inference based on the operation-related information can include determining the inference based on the operation-related information using the neural network, such as discussed herein at least in the context of FIG. 2.

At block 1840, the inference is provided to the kernel component, such as discussed herein at least in the context of FIGS. 1-12. Providing the inference to the kernel component includes: storing a most recently determined one of the successive inferences in at least one memory location of the computing device accessible by the kernel component, such as discussed herein at least in the context of FIG. 2. Storing the most recently determined one of the successive inferences in the at least one memory location of the computing device includes: overwriting at least one previously determined one of the successive inferences at the at least one memory location, such as discussed herein at least in the context of FIG. 2. In other examples, providing the inference to the kernel component can include: providing the inference to the kernel component using a second file that is accessible from the non-kernel memory space and from the kernel memory space, such as discussed herein at least in the context of FIGS. 1 and 4-15.

At block 1850, the kernel component adjusts performance of the kernel operation based on the inference, such as discussed herein at least in the context of FIGS. 1 and 3-12. In some examples, adjusting performance of the kernel operation by the kernel component based on the model-determined value can include: determining an actual value based on the component-determined value and the model-determined value; and performing the kernel operation by the kernel component based on the actual value, such as discussed herein at least in the context of FIGS. 1 and 3-12. In some of these examples, calculating the linear combination of the component-determined value and the model-determined value can include: calculating one or more weights for the linear combination of the component-determined value and the model-determined value using the machine-learning model, such as discussed herein at least in the context of FIGS. 3-5, 7, and 12. In particular of these examples, calculating one or more weights for the linear combination of the component-determined value and the model-determined value using the machine-learning model can include calculating a component-associated weight of the one or more weights for the linear combination using the machine-learning model, the component-associated weight associated with the component-determined value; then, calculating the linear combination of the component-determined value and the model-determined value can include calculating a linear combination of the model-determined value, the component-associated weight, and the component-determined value, such as discussed herein at least in the context of FIGS. 3-5, 7, and 12.

The operation-related information includes process information for a plurality of computer processes executing on the computing device; the inference includes a model-determined priority value for scheduling execution of the plurality of computer processes; and the kernel component of the operating system kernel includes a process scheduler; then, adjusting performance of the kernel operation by the kernel component based on the inference includes scheduling execution of the plurality of computer processes by the process scheduler based on the model-determined priority value using the process scheduler, such as discussed herein at least in the context of FIGS. 1 and 3-5. In some of these examples, scheduling execution of the plurality of computer processes can include scheduling execution of the plurality of computer processes based on the model-determined priority value, such as discussed herein at least in the context of FIGS. 1 and 3-5. In particular of these examples, scheduling
execution of the plurality of computer processes based on the model-determined priority value can include: determining a heuristic-determined priority value associated with the plurality of computer processes using a priority heuristic executed by the process scheduler; determining an actual priority value associated with the plurality of computer processes based on the model-determined priority value and the heuristic-determined priority value; and scheduling execution of the plurality of computer processes based on the actual priority value, such as discussed herein at least in the context of FIGS. 1 and 3-5. In other particular of these examples, determining the actual priority value associated with the plurality of computer processes based on the model-determined priority value and the heuristic-determined priority value can include: calculating a mathematical combination of the model-determined priority value and the heuristic-determined priority value, such as discussed herein at least in the context of FIGS. 3-5. In other particular of these examples, the mathematical combination can include a linear combination of the model-determined priority value and the heuristic-determined priority value, and where calculating the mathematical combination of the model-determined priority value and the heuristic-determined priority value can include calculating one or more weights for the linear combination of the model-determined priority value and the heuristic-determined priority value, such as discussed herein at least in the context of FIGS. 3-5. In some of these examples, calculating one or more weights for the linear combination of the model-determined priority value and the heuristic-determined priority value can include calculating a first-heuristic-associated weight of the one or more weights for the linear combination using the machine-learning model, the first-heuristic-associated weight associated with the heuristic-determined priority value; then, calculating the mathematical combination of the model-determined priority value and the heuristic-determined priority value can include calculating a linear combination of the model-determined priority value, the first-heuristic-associated weight, and the heuristic-determined priority value, such as discussed herein at least in the context of FIGS. 3-5.

In other of these examples, scheduling execution of the plurality of computer processes can include scheduling execution of the plurality of computer processes based on the model-determined time-slice value, such as discussed herein at least in the context of FIGS. 1 and 3-5. In particular of these examples, scheduling execution of the plurality of computer processes based on the model-determined time-slice value can include: determining a heuristic-determined time-slice value associated with the plurality of computer processes using a time-slice heuristic executed by the process scheduler; determining an actual time-slice value associated with the plurality of computer processes based on the model-determined time-slice value and the heuristic-determined time-slice value; and scheduling the plurality of computer processes based on the actual time-slice value, such as discussed herein at least in the context of FIGS. 1 and 3-5. In other particular of these examples, determining the actual time-slice value associated with the plurality of computer processes based on the model-determined time-slice value and the heuristic-determined time-slice value can include: calculating a mathematical combination of the model-determined time-slice value and the heuristic-determined time-slice value, such as discussed herein at least in the context of FIGS. 3-5. In other particular of these examples, the mathematical combination can include a linear combination of the model-determined time-slice value and the heuristic-determined time-slice value; then, calculating the mathematical combination of the model-determined time-slice value and the heuristic-determined time-slice value can include calculating one or more weights for the linear combination of the model-determined time-slice value and the heuristic-determined time-slice value, such as discussed herein at least in the context of FIGS. 3-5. In some of these examples, calculating one or more weights for the linear combination of the model-determined time-slice value and the heuristic-determined time-slice value can include calculating a second-heuristic-associated weight of the one or more weights for the linear combination using the machine-learning model, the second-heuristic-associated weight associated with the heuristic-determined time-slice value; then, calculating the mathematical combination of the model-determined priority value and the heuristic-determined priority value comprises calculating a linear combination of the model-determined time-slice value, the second-heuristic-associated weight and the heuristic-determined time-slice value.

In other examples, the operation-related information can include cache information for a plurality of cache entries associated with a cache of the computing device and access information for the cache, the inference can include a model-determined cache-management value for managing the plurality of cache entries, and the kernel component of the operating system kernel can include a memory manager; then, adjusting performance of the kernel operation by the kernel component based on the inference can include selecting one or more cache entries of the plurality of cache entries for storage in the cache based on the model-determined cache-management value using the memory manager, such as discussed herein at least in the context of FIGS. 1, 3, 6, and 7. In some of these examples, selecting one or more cache entries of the plurality of cache entries for storage in the cache based on the model-determined cache-management value can include: determining a heuristic-determined cache priority value associated with the plurality of cache entries using a priority heuristic executed by the memory manager; determining an actual cache priority value associated with the plurality of cache entries based on the model-determined cache priority value and the heuristic-determined cache priority value; and selecting the one or more cache entries of the plurality of cache entries for storage in the cache based on the actual cache priority value, such as discussed herein at least in the context of FIGS. 1, 3, 6, and 7. In particular of these examples, determining the actual cache priority value associated with the plurality of cache entries based on the model-determined cache priority value and the heuristic-determined cache priority value can include: calculating a mathematical combination of the model-determined cache priority value and the heuristic-determined cache priority value, such as discussed herein at least in the context of FIGS. 1, 3, 6, and 7. In other particular of these examples, the mathematical combination can include a linear combination of the model-determined cache priority value and the heuristic-determined cache priority value; then, calculating the mathematical combination of the model-determined cache priority value and the heuristic-determined cache priority value can include calculating one or more weights for the linear combination of the model-determined cache priority value and the heuristic-determined cache priority value, such as discussed herein at least in the context of FIGS. 1, 3, 6, and 7. In other particular of these examples, calculating one or more weights for the linear combination of the model-determined cache priority value and the heuristic-determined cache priority value can include calculating a third-heuristic-associated weight of the one or more weights for the linear combination using the machine-learning model, the third-heuristic-associated weight associated with the heuristic-determined cache priority value; then, calculating the mathematical combination of the model-determined priority value and the heuristic-determined priority value can include calculating a linear combination of the model-determined cache priority value the third-heuristic-associated weight, and the heuristic-determined cache priority value, such as discussed herein at least in the context of FIGS. 1, 3, 6, and 7. In other particular of these examples, selecting the one or more cache entries of the plurality of cache entries for storage in the cache based on the model-determined cache-management value can include selecting a cache entry to be replaced in the cache based on the model-determined cache-management value, such as discussed herein at least in the context of FIGS. 1, 3, 6, and 7.

In other examples, the operation-related information can include memory-request information for memory requests related to data storage of the computing device, where the inference can include an indication for managing the data storage; and where the kernel component of the operating system kernel can include a memory manager; then, adjusting performance of the kernel operation by the kernel component based on the inference can include managing the data storage based on the indication for managing the data storage using the memory manager, such as discussed herein at least in the context of FIGS. 1, 3, 6, 7, and 10. In some of these examples, at least a portion of the data storage can be organized as pairs of memory blocks, where both memory blocks of a pair of memory blocks can have a same size, such as discussed herein at least in the context of FIGS. 1, 3, and 6. In particular of these examples, the pairs of memory blocks can include a first pair of memory blocks, and the indication for managing the data storage can include at least one of: an indication to join the first pair of memory blocks into one memory block, and an indication to split one memory block of the first pair of memory blocks into two or more memory blocks, such as discussed herein at least in the context of FIGS. 1, 3, and 6. In other of these examples, at least a portion of the data storage can be organized as slabs of memory, where a slab of memory can be configured to store a plurality of copies of one predetermined data structure, such as discussed herein at least in the context of FIGS. 1, 3, and 6. In particular of these examples, the slabs of memory can include a first slab of memory, where the indication for managing the data storage can include at least one of: an indication to allocate a slab of memory of the slabs of memory, an indication to deallocate a slab of memory of the slabs of memory, and an indication to resize a slab of memory of the slabs of memory, such as discussed herein at least in the context of FIGS. 1, 3, and 6.

In other examples, the operation-related information can include input-output information for usage of one or more input-output devices of the computing device for performing input and/or output by one or more processes executing on the computing device, the inference can include a model-input-output-related characterization of the one or more processes executing on the computing device; and he kernel component of the operating system kernel can include an input/output manager; then, adjusting performance of the kernel operation by the kernel component based on the inference can include scheduling usage of the one or more input-output devices by one or more processes based on the model-input-output-related characterization using the input/output manager, such as discussed herein at least in the context of FIGS. 1, 3, 8, and 9. In particular of these examples, the model-input-output-related characterization can include at least one of: a soft real-time characterization of a process; an interactive characterization of a process; and a baseline characterization of a process, such as discussed herein at least in the context of FIGS. 1, 3, 8, and 9. In other particular of these examples, scheduling usage of the one or more input-output devices by the one or more processes based on the model-input-output-related characterization can include: assigning a relatively-high priority for usage of the one or more input-output devices to a process having a soft real-time characterization, such as discussed herein at least in the context of FIGS. 1, 3, 8, and 9. In other particular of these examples, scheduling usage of the one or more input-output devices by the one or more processes based on the model-input-output-related characterization can include: assigning a relatively-high priority for usage of the one or more input-output devices to a process having an interactive characterization, such as discussed herein at least in the context of FIGS. 1, 3, 8, and 9. In other particular of these examples, scheduling usage of the one or more input-output devices by the one or more processes based on the model-input-output-related characterization can include: assigning a relatively-low priority for usage of the one or more input-output devices to a process having an baseline characterization, such as discussed herein at least in the context of FIGS. 1, 3, 8, and 9. In other particular of these examples, the model-input-output-related characterization can include an agreement indicator; then, scheduling usage of the one or more input-output devices by the one or more processes based on the model-input-output-related characterization can include: determining whether the agreement indicator of the model-input-output-related characterization indicates agreement between the machine-learning model and the input/output manager; and after determining that the agreement indicator of the model-input-output-related characterization does indicate agreement between the machine-learning model and the input/output manager, the input/output manager: utilizing a heuristic to determine a heuristic-input-output-related characterization of a first process associated with the model-input-output-related characterization, and scheduling usage of the one or more input-output devices by the first process based on the model-input-output-related characterization and the heuristic-input-output-related characterization, such as discussed herein at least in the context of FIGS. 1, 3, 8, and 9. In other particular of these examples, the model-input-output-related characterization can include an agreement indicator; then, scheduling usage of the one or more input-output devices by the one or more processes based on the model-input-output-related characterization can include: determining whether the agreement indicator of the model-input-output-related characterization does not indicate agreement between the machine-learning model and the input/output manager; and after determining that the agreement indicator of the model-input-output-related characterization does not indicate agreement between the machine-learning model and the input/output manager, the input/output manager: refraining from utilizing a heuristic to characterize a first process that is associated with the model-input-output-related characterization, and scheduling usage of the one or more input-output devices by the first process based on the model-input-output-related characterization, such as discussed herein at least in the context of FIGS. 1, 3, 8, and 9.

In other examples, the operation-related information can include paging information for one or more memory pages accessible by one or more processes executing on the computing device, each of the one or more memory pages can be either compressed or decompressed, the inference can include a compression indication associated with at least a first memory page of the one or more memory pages; and the kernel component of the operating system kernel can include a memory manager; then, adjusting performance of the kernel operation by the kernel component based on the inference can include: determining whether to compress the first memory page based on the compression indication using the memory manager, and after determining to compress the first memory page, compressing the first memory page using the memory manager, such as discussed herein at least in the context of FIGS. 1, 3, and 10. In some of these examples, adjusting performance of the kernel operation by the kernel component based on the inference can further include: determining whether to decompress the first memory page based on the compression indication using the memory manager, and after determining to decompress the first memory page, decompressing the first memory page using the memory manager, such as discussed herein at least in the context of FIGS. 1, 3, and 10. In other of these examples, at least the first memory page is stored on a compressed block device, such as discussed herein at least in the context of FIGS. 1, 3, and 10.

In other examples, the operation-related information can include resource allocation information related to one or more resource buckets associated with one or more software applications executable on the computing device; the inference can include an indication of resource limits related to at least one resource bucket of the one or more resource buckets, and the kernel component of the operating system kernel can include a system resource manager; then, adjusting performance of the kernel operation by the kernel component based on the inference can include determining resource limits related to the at least one resource bucket of the one or more resource buckets based on the indication of resource limits using the system resource manager, such as discussed herein at least in the context of FIGS. 1, 3, 11, and 12. In some of these examples, the one or more resource buckets can include: a first resource bucket related to first resource limits; a second resource bucket having second resource limits that are larger than the first resource limits; a third resource bucket having third resource limits that are larger than the second resource limits; a fourth resource bucket having fourth resource limits that are larger than the third resource limits; and a fifth resource bucket having fifth resource limits that are larger than the fourth resource limits, such as discussed herein at least in the context of FIGS. 1, 3, 11, and 12. In other of these examples, determining the resource limits related to the at least one resource bucket of the one or more resource buckets based on the indication of resource limits can include: determining heuristic-determined bucket resource limits related to the at least one resource bucket using a bucket-content heuristic of the system resource manager; determining actual bucket resource limits related the at least one resource bucket based on the indication of resource limits and the heuristic-determined bucket resource limits; and determining the resource limits related to the at least one resource bucket based on the actual bucket resource limits, such as discussed herein at least in the context of FIGS. 1, 3, 11, and 12. In other of these examples, the operation-related information can further include resource allocation information related to the one or more resource buckets associated with the one or more software applications, and the inference can further include a resource-bucket-assignment indication assigning a first software application of the one or more software applications to a first resource bucket of the one or more resource buckets; then, where adjusting performance of the kernel operation by the kernel component based on the inference can further include assigning the first software application to the first resource bucket based on the resource-bucket-assignment indication using the system resource manager, such as discussed herein at least in the context of FIGS. 1, 3, 11, and 12. In particular of these examples, assigning the first software application to the first resource bucket based on the resource-bucket-assignment indication can include limiting resource usage by the first software application based on one or more resource limits associated with the first resource bucket using the system resource manager, such as discussed herein at least in the context of FIGS. 1, 3, 11, and 12. In some examples, method 1800 can further include: collecting the successive batches of operation-related information repeatedly at the intervals corresponding to the set time quantum; and providing the collected batches of operation-related information to the machine-learning model at the intervals corresponding to the set time quantum, such as discussed herein at least in the context of FIG. 2.

In other examples, the machine-learning model can be resident in a non-kernel memory space of the computing device; then method 1800 can further include: executing the machine-learning model in the non-kernel memory space, such as discussed herein at least in the context of FIGS. 1 and 4-15. In some of these examples, executing the machine-learning model in the non-kernel memory space of the computing device can include executing an inference daemon in the non-kernel memory space, and where the inference daemon can include the machine-learning model, such as discussed herein at least in the context of FIGS. 1 and 4-15. In other of these examples, the operating system kernel can be resident in a kernel memory space of the computing device that is distinct from the non-kernel memory space; then, method 1800 can further include: executing the kernel component in the kernel memory space, such as discussed herein at least in the context of FIGS. 1 and 4-15.

In other examples, method 1800 can further include: receiving, at the machine-learning model, application-related information for a software application executing on the computing device; determining, by the machine-learning model, an application-related inference based on the application-related information; providing the application-related inference to the software application; and adjusting performance of the software application based on the application-related inference, such as discussed herein at least in the context of FIGS. 1, 3, and 13-15. In some of these examples, the software application can include a database application, the application-related information can include database-related information for processes executing on the computing device and for usage of a database associated with the database application, and the application-related inference can include a checkpoint indication related to checkpointing a database associated with the database application; then, adjusting performance of the software application based on the application-related inference can include: determining whether to checkpoint the database associated with the database application based on the checkpoint indication using the database application, such as discussed herein at least in the context of FIGS. 1, 3, and 13. In particular of these examples, adjusting performance of the software application based on the application-related inference can further include: after determining to checkpoint the database associated with the database application based on the checkpoint indication, checkpointing the database using the database application, such as discussed herein at least in the context of FIGS. 1, 3, and 13. In other particular of these examples, adjusting performance of the software application based on the application-related inference can further include: after determining not to checkpoint the database associated with the database application based on the checkpoint indication, refraining from checkpointing the database using the database application, such as discussed herein at least in the context of FIGS. 1, 3, and 13.

In other of these examples, the software application can include an audio/video application, the application-related information can include audio-video-related information for processes executing on the computing device and for audio and/or video content associated with the audio/video application, and the application-related inference can include a buffer indication related to a number of buffers allocated to the audio/video application; then, adjusting performance of the software application based on the application-related inference can include: determining whether to change the number of buffers allocated to the audio/video application based on the buffer indication, such as discussed herein at least in the context of FIGS. 1, 3, 14, and 15. In particular of these examples, adjusting performance of the software application based on the application-related inference can further include: after determining to change the number of buffers allocated to the audio/video application based on the buffer indication, the audio/video application requesting allocation of one or more additional buffers, such as discussed herein at least in the context of FIGS. 1, 3, 14, and 15. In other particular of these examples, adjusting performance of the software application based on the application-related inference can further include: after determining to change the number of buffers allocated to the audio/video application based on the buffer indication, requesting deallocation of at least one buffer of the number of buffers allocated to the audio/video application, such as discussed herein at least in the context of FIGS. 1, 3, 14, and 15. In other particular of these examples, adjusting performance of the software application based on the application-related inference can further include after determining not to change the number of buffers allocated to the audio/video application based on the buffer indication, maintaining the number of buffers allocated to the audio/video application, such as discussed herein at least in the context of FIGS. 1, 3, 14, and 15. In other examples, method 1800 can further include: generating an output of the computing device using the number of buffers allocated to the audio/video application, where the output is based on the audio and/or video content, such as discussed herein at least in the context of FIGS. 1, 3, 14, and 15.

In other examples, the software application can include a compiler, the application-related information can include compiler-related information for processes executing on the computing device and for software instructions associated with the compiler, and the application-related inference can include a hot loop indication related to a first loop of the software instructions; then, adjusting performance of the software application based on the application-related inference can include: determining whether a first loop is a hot loop based on the hot loop indication using the compiler, such as discussed herein at least in the context of FIGS. 1, 3, 14, and 15. In particular of these examples, adjusting performance of the software application based on the application-related inference can further include: after determining that the first loop is a hot loop based on the hot loop indication: compiling the software instructions of the first loop, and executing the compiled software instructions of the first loop, such as discussed herein at least in the context of FIGS. 1, 3, 14, and 15. In other particular of these examples, adjusting performance of the software application based on the application-related inference can further include: after determining that the first loop is not a hot loop based on the hot loop indication, executing the software instructions of the first loop, such as discussed herein at least in the context of FIGS. 1, 3, 14, and 15.

In other examples, method 1800 can further include: generating an output of the computing device based on the performance of the kernel operation by the kernel component, such as discussed herein at least in the context of FIGS. 4, 9, 13, and 14. In some of these examples, the output of the computing device can include a visual output, such as discussed herein at least in the context of FIGS. 4, 9, 13, and 14. In other of these examples, the output of the computing device can include an audio output, such as discussed herein at least in the context of FIGS. 4, 9, 13, and 14. In other of these examples, the output of the computing device can include a haptic output, such as discussed herein at least in the context of FIGS. 4 and 9.

The present disclosure is not to be limited in terms of the particular embodiments described in this application, which are intended as illustrations of various aspects. Many modifications and variations can be made without departing from its scope, as will be apparent to those skilled in the art. The invention is defined by the appended claims.

The above detailed description describes various features and functions of the disclosed systems, devices, and methods with reference to the accompanying figures. In the figures, similar symbols typically identify similar components, unless context dictates otherwise. The illustrative embodiments described in the detailed description, figures, and claims are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein.

With respect to any or all of the ladder diagrams, scenarios, and flow charts in the figures and as discussed herein, each block and/or communication may represent a processing of information and/or a transmission of information in accordance with example embodiments. Alternative embodiments are included within the scope of these example embodiments. In these alternative embodiments, for example, functions described as blocks, transmissions, communications, requests, responses, and/or messages may be executed out of order from that shown or discussed, including substantially concurrent or in reverse order, depending on the functionality involved. Further, more or fewer blocks and/or functions may be used with any of the ladder diagrams, scenarios, and flow charts discussed herein, and these ladder diagrams, scenarios, and flow charts may be combined with one another, in part or in whole.

A block that represents a processing of information may correspond to circuitry that can be configured to perform the specific logical functions of a herein-described method or technique. Alternatively or additionally, a block that represents a processing of information may correspond to a module, a segment, or a portion of program code (including related data). The program code may include one or more instructions executable by a processor for implementing specific logical functions or actions in the method or technique. The program code and/or related data may be stored on any type of computer readable medium such as a storage device including a disk or hard drive or other storage medium.

The computer readable medium may also include non-transitory computer readable media such as non-transitory computer-readable media that stores data for short periods of time like register memory, processor cache, and RAM. The computer readable media may also include non-transitory computer readable media that acts as a backing store and/or stores program code and/or data for longer periods of time, such as secondary or persistent long term storage, like read only memory (ROM), optical or magnetic disks, compact-disc read only memory (CD-ROM), for example. The computer readable media may also be any other volatile or non-volatile storage systems. A computer readable medium may be considered a computer readable storage medium, for example, or a tangible storage device.

Moreover, a block that represents one or more information transmissions may correspond to information transmissions between software and/or hardware modules in the same physical device. However, other information transmissions may be between software modules and/or hardware modules in different physical devices.

While various aspects and embodiments have been disclosed herein, other aspects and embodiments will be apparent to those skilled in the art. The various aspects and embodiments disclosed herein are for provided for explanatory purposes and are not intended to be limiting, with the true scope being indicated by the following claims.

## Claims

1. A computer-implemented method (1800), comprising:
performing (1810) a kernel operation by a kernel component of an operating system kernel executing on a computing device, wherein the kernel component of the operating system kernel comprises a process scheduler;
receiving (1820), at a machine-learning model executing on the computing device, successive batches of operation-related information related to the kernel operation, wherein the operation-related information comprises process information for a plurality of computer processes executing on the computing device;
determining (1830), by the machine-learning model, successive inferences based on the successive batches of operation-related information;
providing (1840) an inference to the kernel component, wherein the inference comprises a model-determined priority value for scheduling execution of the plurality of computer processes, wherein providing the inference comprises storing a most recently determined one of the successive inferences in at least one memory location of the computing device accessible by the kernel component by overwriting at least one previously determined one of the successive inferences at the at least one memory location; and
adjusting (1850) performance of the operating system kernel executing on the computing device by adjusting performance of the kernel operation by the kernel component based on the inference, wherein adjusting performance of the kernel operation by the kernel component based on the inference comprises scheduling execution of the plurality of computer processes by the process scheduler based on the model-determined priority value using the process scheduler.

2. The computer-implemented method of claim 1,
wherein performing the kernel operation by the kernel component comprises determining a heuristic-determined priority value using a priority heuristic executed by the process scheduler; and
wherein determining the inference based on the operation-related information comprises determining a model-determined priority value based on the operation-related information.

3. The computer-implemented method of claim 2, wherein adjusting performance of the kernel operation by the kernel component based on the model-determined value comprises:
determining an actual priority value based on the heuristic-determined priority value and the model-determined priority value; and
scheduling execution of the plurality of computing processes by the process scheduler based on the actual priority value.

4. The computer-implemented method of claim 3, wherein determining the actual priority value based on the heuristic-determined priority value and the model-determined priority value comprises:
calculating a mathematical combination of the heuristic-determined priority value and the model-determined priority value, wherein the mathematical combination comprises a linear combination of the heuristic-determined priority value and the model-determined priority value.

5. The computer-implemented method of claim 4, wherein calculating the linear combination of the heuristic-determined priority value and the model-determined priority value comprises:
calculating one or more weights for the linear combination of the heuristic-determined priority value and the model-determined priority value using the machine-learning model,
optionally:
wherein calculating one or more weights for the linear combination of the heuristic-determined priority value and the model-determined priority value using the machine-learning model comprises calculating a heuristic-associated weight of the one or more weights for the linear combination using the machine-learning model, the heuristic-associated weight associated with the heuristic-determined priority value; and
wherein calculating the linear combination of the heuristic-determined priority value and the model-determined priority value comprises calculating a linear combination of the model-determined priority value, the heuristic-associated weight, and the component-determined priority value.

6. The computer-implemented method of any one of claims 1-5, wherein the successive batches of operation-related information are received at intervals corresponding to a set time quantum.

7. The computer-implemented method of claim 6, further comprising:
collecting the successive batches of operation-related information repeatedly at the intervals corresponding to the set time quantum; and
providing the collected batches of operation-related information to the machine-learning model at the intervals corresponding to the set time quantum.

8. The computer-implemented method of claim 6 or 7, wherein the successive inferences are determined at intervals corresponding to the set time quantum based on a most recently received batch of operation-related information.

9. The computer-implemented method of any one of claims 1-8, wherein the machine-learning model is resident in a non-kernel memory space of the computing device, and wherein the method further comprises:
executing the machine-learning model in the non-kernel memory space.

10. The computer-implemented method of claim 9, wherein executing the machine-learning model in the non-kernel memory space of the computing device comprises executing an inference daemon in the non-kernel memory space, and wherein the inference daemon comprises the machine-learning model.

11. The computer-implemented method of claim 9 or claim 10, wherein the operating system kernel is resident in a kernel memory space of the computing device that is distinct from the non-kernel memory space, and wherein the method further comprises:
executing the kernel component in the kernel memory space,
optionally wherein receiving the operation-related information comprises:
receiving, at the machine-learning model, the operation-related information using a first file or first kernel object that is accessible from the non-kernel memory space and from the kernel memory space.

12. The computer-implemented method of claim 11, wherein providing the inference to the kernel component comprises:
providing the inference to the kernel component using a second file or second kernel object that is accessible from the non-kernel memory space and from the kernel memory space.

13. A computing device (1700), comprising:
means for carrying out the computer-implemented method of any one of claims 1-12.

14. A computer program product comprising computer-executable instructions (1706) which, when executed by at least one computing apparatus, cause the at least one computing apparatus to perform the method of any one of claims 1 to 12.

## Patentansprüche

1. Computerimplementiertes Verfahren (1800), umfassend:
Durchführen (1810) einer Kernel-Operation durch eine Kernel-Komponente eines auf der Rechenvorrichtung ausgeführten Betriebssystem-Kernels, wobei die Kernel-Komponente des Betriebssystem-Kernels einen Prozess-Scheduler umfasst;
Empfangen (1820), an einem auf der Rechenvorrichtung ausgeführten Modell für maschinelles Lernen, von aufeinanderfolgenden Stapeln von operationsbezogenen Informationen, die sich auf die Kernel-Operation beziehen, wobei die operationsbezogenen Informationen Prozessinformationen für eine Mehrzahl von auf der Rechenvorrichtung ausgeführten Computerprozessen umfassen;
Bestimmen (1830), durch das Modell für maschinelles Lernen, von aufeinanderfolgenden Inferenzen basierend auf den aufeinanderfolgenden Stapeln von operationsbezogenen Informationen;
Bereitstellen (1840) einer Inferenz an die Kernel-Komponente, wobei die Inferenz einen modellbestimmten Prioritätswert zum Planen der Ausführung der Mehrzahl von Computerprozessen umfasst, wobei das Bereitstellen der Inferenz das Speichern einer zuletzt bestimmten der aufeinanderfolgenden Inferenzen an mindestens einem für die Kernel-Komponente zugänglichen Speicherort der Rechenvorrichtung, durch Überschreiben mindestens einer zuvor bestimmten der aufeinanderfolgenden Inferenzen an dem mindestens einen Speicherort umfasst; und
Anpassen (1850) der Leistung des auf der Rechenvorrichtung ausgeführten Betriebssystem-Kernels durch Anpassen der Leistung der Kernel-Operation durch die Kernel-Komponente basierend auf der Inferenz, wobei das Anpassen der Leistung der Kernel-Operation durch die Kernel-Komponente basierend auf der Inferenz das Planen der Ausführung der Mehrzahl von Computerprozessen durch den Prozess-Scheduler basierend auf dem modellbestimmten Prioritätswert unter Verwendung des Prozess-Schedulers umfasst.

2. Computerimplementiertes Verfahren nach Anspruch 1,
wobei das Durchführen der Kernel-Operation durch die Kernel-Komponente das Bestimmen eines heuristikbestimmten Prioritätswerts unter Verwendung einer durch den Prozess-Scheduler ausgeführten Prioritätsheuristik umfasst; und
wobei das Bestimmen der Inferenz basierend auf den operationsbezogenen Informationen das Bestimmen eines modellbestimmten Prioritätswerts basierend auf den operationsbezogenen Informationen umfasst.

3. Computerimplementiertes Verfahren nach Anspruch 2, wobei das Anpassen der Leistung der Kernel-Operation durch die Kernel-Komponente basierend auf dem modellbestimmten Wert Folgendes umfasst:
Bestimmen eines tatsächlichen Prioritätswerts basierend auf dem heuristikbestimmten Prioritätswert und dem modellbestimmten Prioritätswert; und
Planen der Ausführung der Mehrzahl von Rechenprozessen durch den Prozess-Scheduler basierend auf dem tatsächlichen Prioritätswert.

4. Computerimplementiertes Verfahren nach Anspruch 3, wobei das Bestimmen des tatsächlichen Prioritätswerts basierend auf dem heuristikbestimmten Prioritätswert und dem modellbestimmten Prioritätswert Folgendes umfasst:
Berechnen einer mathematischen Kombination aus dem heuristikbestimmten Prioritätswert und dem modellbestimmten Prioritätswert, wobei die mathematische Kombination eine Linearkombination aus dem heuristikbestimmten Prioritätswert und dem modellbestimmten Prioritätswert umfasst.

5. Computerimplementiertes Verfahren nach Anspruch 4, wobei das Berechnen der Linearkombination aus dem heuristikbestimmten Prioritätswert und dem modellbestimmten Prioritätswert Folgendes umfasst:
Berechnen eines oder mehrerer Gewichte für die Linearkombination aus dem heuristikbestimmten Prioritätswert und dem modellbestimmten Prioritätswert unter Verwendung des Modells für maschinelles Lernen,
optional:
wobei das Berechnen eines oder mehrerer Gewichte für die Linearkombination aus dem heuristikbestimmten Prioritätswert und dem modellbestimmten Prioritätswert unter Verwendung des Modells für maschinelles Lernen das Berechnen eines heuristikverknüpften Gewichts des einen oder der mehreren Gewichte für die Linearkombination unter Verwendung des Modells für maschinelles Lernen umfasst, wobei das heuristikverknüpfte Gewicht mit dem heuristikbestimmten Prioritätswert verknüpft ist; und
wobei das Berechnen der Linearkombination aus dem heuristikbestimmten Prioritätswert und dem modellbestimmten Prioritätswert das Berechnen einer Linearkombination aus dem modellbestimmten Prioritätswert, dem heuristikverknüpften Gewicht und dem komponentenbestimmten Prioritätswert umfasst.

6. Computerimplementiertes Verfahren nach einem der Ansprüche 1-5, wobei die aufeinanderfolgenden Stapel von operationsbezogenen Informationen in Intervallen empfangen werden, die einem festgelegten Zeitquant entsprechen.

7. Computerimplementiertes Verfahren nach Anspruch 6, ferner umfassend:
Sammeln der aufeinanderfolgenden Stapel von operationsbezogenen Informationen wiederholt in den Intervallen, die dem festgelegten Zeitquant entsprechen; und
Bereitstellen der gesammelten Stapel von operationsbezogenen Informationen an das Modell für maschinelles Lernen in den Intervallen, die dem festgelegten Zeitquant entsprechen.

8. Computerimplementiertes Verfahren nach Anspruch 6 oder 7, wobei die aufeinanderfolgenden Inferenzen in Intervallen, die dem festgelegten Zeitquant entsprechen, basierend auf einem zuletzt empfangenen Stapel von operationsbezogenen Informationen bestimmt werden.

9. Computerimplementiertes Verfahren nach einem der Ansprüche 1-8, wobei das Modell für maschinelles Lernen in einem Nicht-Kernel-Speicherraum der Rechenvorrichtung resident ist, und wobei das Verfahren ferner Folgendes umfasst:
Ausführen des Modells für maschinelles Lernen in dem Nicht-Kernel-Speicherraum.

10. Computerimplementiertes Verfahren nach Anspruch 9, wobei das Ausführen des Modells für maschinelles Lernen in dem Nicht-Kernel-Speicherraum der Rechenvorrichtung das Ausführen eines Inferenz-Daemons in dem Nicht-Kernel-Speicherraum umfasst, und wobei der Inferenz-Daemon das Modell für maschinelles Lernen umfasst.

11. Computerimplementiertes Verfahren nach Anspruch 9 oder Anspruch 10, wobei der Betriebssystem-Kernel in einem Kernel-Speicherraum der Rechenvorrichtung resident ist, der von dem Nicht-Kernel-Speicherraum verschieden ist, und wobei das Verfahren ferner Folgendes umfasst:
Ausführen der Kernel-Komponente in dem Kernel-Speicherraum, optional wobei das Empfangen der operationsbezogenen Informationen Folgendes umfasst:
Empfangen, an dem Modell für maschinelles Lernen, der operationsbezogenen Informationen unter Verwendung einer ersten Datei oder eines ersten Kernel-Objekts, das von dem Nicht-Kernel-Speicherraum und von dem Kernel-Speicherraum zugänglich ist.

12. Computerimplementiertes Verfahren nach Anspruch 11, wobei das Bereitstellen der Inferenz an die Kernel-Komponente Folgendes umfasst:
Bereitstellen der Inferenz an die Kernel-Komponente unter Verwendung einer zweiten Datei oder eines zweiten Kernel-Objekts, das von dem Nicht-Kernel-Speicherraum und von dem Kernel-Speicherraum zugänglich ist.

13. Rechenvorrichtung (1700), umfassend:
Mittel zum Ausführen des computerimplementierten Verfahrens nach einem der Ansprüche 1-12.

14. Computerprogrammprodukt, umfassend computerausführbare Anweisungen (1706), die, wenn sie von mindestens einer Recheneinrichtung ausgeführt werden, bewirken, dass die mindestens eine Recheneinrichtung das Verfahren nach einem der Ansprüche 1 bis 12 durchführt.

## Revendications

1. Procédé mis en œuvre par ordinateur (1800) comprenant :
la réalisation (1810) d'une opération de noyau par un composant de noyau d'un noyau de système d'exploitation s'exécutant sur un dispositif informatique, dans lequel le composant de noyau du noyau de système d'exploitation comprend un ordonnanceur de processus ;
la réception (1820), au niveau d'un modèle d'apprentissage automatique exécuté sur le dispositif informatique, de lots successifs d'informations relatives à l'opération associées à l'opération de noyau, dans lequel les informations relatives à l'opération comprennent des informations de processus pour une pluralité de processus informatiques exécutés sur le dispositif informatique ;
la détermination (1830), par le modèle d'apprentissage automatique, d'inférences successives sur la base des lots successifs d'informations relatives à l'opération ;
la fourniture (1840) d'une inférence au composant de noyau, dans lequel l'inférence comprend une valeur de priorité déterminée par un modèle pour ordonnancer l'exécution de la pluralité de processus informatiques, dans lequel la fourniture de l'inférence comprend le stockage d'une inférence déterminée le plus récemment parmi les inférences successives dans au moins un emplacement de mémoire du dispositif informatique accessible par le composant de noyau en écrasant au moins une inférence déterminée précédemment parmi les inférences successives dans l'au moins un emplacement de mémoire ; et
l'ajustement (1850) des performances du noyau de système d'exploitation exécuté sur le dispositif informatique en ajustant les performances de l'opération de noyau par le composant de noyau sur la base de l'inférence, dans lequel l'ajustement des performances de l'opération de noyau par le composant de noyau sur la base de l'inférence comprend l'ordonnancement de l'exécution de la pluralité de processus informatiques par l'ordonnanceur de processus sur la base de la valeur de priorité déterminée par le modèle à l'aide de l'ordonnanceur de processus.

2. Procédé mis en œuvre par ordinateur selon la revendication 1, dans lequel la réalisation de l'opération de noyau par le composant de noyau comprend la détermination d'une valeur de priorité déterminée par une heuristique à l'aide d'une heuristique de priorité exécutée par l'ordonnanceur de processus ; et
dans lequel la détermination de l'inférence sur la base des informations relatives à l'opération comprend la détermination d'une valeur de priorité déterminée par le modèle sur la base des informations relatives à l'opération.

3. Procédé mis en œuvre par ordinateur selon la revendication 2, dans lequel l'ajustement des performances de l'opération de noyau par le composant de noyau sur la base de la valeur déterminée par le modèle comprend :
la détermination d'une valeur de priorité réelle sur la base de la valeur de priorité déterminée par l'heuristique et de la valeur de priorité déterminée par le modèle ; et
l'ordonnancement de l'exécution de la pluralité de processus informatiques par l'ordonnanceur de processus sur la base de la valeur de priorité réelle.

4. Procédé mis en œuvre par ordinateur selon la revendication 3, dans lequel la détermination de la valeur de priorité réelle sur la base de la valeur de priorité déterminée par l'heuristique et de la valeur de priorité déterminée par le modèle comprend : le calcul d'une combinaison mathématique de la valeur de priorité déterminée par l'heuristique et de la valeur de priorité déterminée par le modèle, dans lequel la combinaison mathématique comprend une combinaison linéaire de la valeur de priorité déterminée par l'heuristique et de la valeur de priorité déterminée par le modèle.

5. Procédé mis en œuvre par ordinateur selon la revendication 4, dans lequel le calcul de la combinaison linéaire de la valeur de priorité déterminée par l'heuristique et de la valeur de priorité déterminée par le modèle comprend :
le calcul d'un ou plusieurs poids pour la combinaison linéaire de la valeur de priorité déterminée par l'heuristique et de la valeur de priorité déterminée par le modèle à l'aide du modèle d'apprentissage automatique, éventuellement :
dans lequel le calcul d'un ou plusieurs poids pour la combinaison linéaire de la valeur de priorité déterminée par l'heuristique et de la valeur de priorité déterminée par le modèle à l'aide du modèle d'apprentissage automatique comprend le calcul d'un poids associé à l'heuristique des un ou plusieurs poids pour la combinaison linéaire à l'aide du modèle d'apprentissage automatique, le poids associé à l'heuristique étant associé à la valeur de priorité déterminée par l'heuristique ; et
dans lequel le calcul de la combinaison linéaire de la valeur de priorité déterminée par l'heuristique et de la valeur de priorité déterminée par le modèle comprend le calcul d'une combinaison linéaire de la valeur de priorité déterminée par le modèle, du poids associé à l'heuristique et de la valeur de priorité déterminée par le composant.

6. Procédé mis en œuvre par ordinateur selon l'une quelconque des revendications 1 à 5, dans lequel les lots successifs d'informations relatives à l'opération sont reçus à des intervalles correspondant à un quantum de temps défini.

7. Procédé mis en œuvre par ordinateur selon la revendication 6, comprenant en outre :
la collecte, de manière répétée, des lots successifs d'informations relatives à l'opération aux intervalles correspondant au quantum de temps défini ; et
la fourniture des lots collectés d'informations relatives à l'opération au modèle d'apprentissage automatique aux intervalles correspondant au quantum de temps défini.

8. Procédé mis en œuvre par ordinateur selon la revendication 6 ou 7, dans lequel les inférences successives sont déterminées à des intervalles correspondant au quantum de temps défini sur la base d'un lot d'informations relatives à l'opération reçu le plus récemment.

9. Procédé mis en œuvre par ordinateur selon l'une quelconque des revendications 1 à 8, dans lequel le modèle d'apprentissage automatique réside dans un espace mémoire hors noyau du dispositif informatique, et dans lequel le procédé comprend en outre :
l'exécution du modèle d'apprentissage automatique dans l'espace mémoire hors noyau.

10. Procédé mis en œuvre par ordinateur selon la revendication 9, dans lequel l'exécution du modèle d'apprentissage automatique dans l'espace mémoire hors noyau du dispositif informatique comprend l'exécution d'un démon d'inférence dans l'espace mémoire hors noyau, et dans lequel le démon d'inférence comprend le modèle d'apprentissage automatique.

11. Procédé mis en œuvre par ordinateur selon la revendication 9 ou la revendication 10, dans lequel le noyau de système d'exploitation réside dans un espace mémoire de noyau du dispositif informatique distinct de l'espace mémoire hors noyau, et dans lequel le procédé comprend en outre :
l'exécution du composant de noyau dans l'espace mémoire de noyau,
éventuellement dans lequel la réception des informations relatives à l'opération comprend :
la réception, au niveau du modèle d'apprentissage automatique, des informations relatives à l'opération à l'aide d'un premier fichier ou d'un premier objet noyau accessible depuis l'espace mémoire hors noyau et depuis l'espace mémoire de noyau.

12. Procédé mis en œuvre par ordinateur selon la revendication 11, dans lequel la fourniture de l'inférence au composant de noyau comprend :
la fourniture de l'inférence au composant de noyau à l'aide d'un second fichier ou d'un second objet noyau accessible depuis l'espace mémoire hors noyau et depuis l'espace mémoire de noyau.

13. Dispositif informatique (1700), comprenant :
des moyens de réalisation du procédé mis en œuvre par ordinateur selon l'une quelconque des revendications 1 à 12.

14. Produit de programme informatique comprenant des instructions exécutables par ordinateur (1706) qui, lorsqu'elles sont exécutées par au moins un appareil informatique, amènent l'au moins un appareil informatique à réaliser le procédé selon l'une quelconque des revendications 1 à 12.
